# EUROPÄISCHE PATENTSCHRIFT

(11) **EP 4 041 488 B1**
(45) Veröffentlichungstag und Bekanntmachung des Hinweises auf die Patenterteilung: **15.05.2024**
(21) Anmeldenummer: 20793576.8
(22) Anmeldetag: 06.10.2020
(51) Int. Cl.: B23K 26/073, B23K 26/382, B23K 26/53, C03C 23/00

(54) **OPTISCHES STANZEN VON MIKROLÖCHERN IN DÜNNGLAS**
OPTICAL STAMPING OF MICRO-HOLES INTO THIN GLASS
ESTAMPAGE OPTIQUE DE MICROPERFORATIONS DANS DU VERRE MINCE

(30) Priorität: 11.10.2019 DE 102019127514; 02.03.2020 DE 102020105540
(43) Veröffentlichungstag der Anmeldung: 17.08.2022
(73) Patentinhaber: TRUMPF Laser- und Systemtechnik GmbH, 71254 Ditzingen (DE)
(72) Erfinder: KLEINER, Jonas, 71229 Leonberg (DE); FLAMM, Daniel, 71640 Ludwigsburg (DE); KAISER, Myriam, 71296 Heimsheim (DE)
(74) Vertreter: Trumpf Patentabteilung
(86) Internationale Anmeldenummer: PCT/EP2020/077922
(87) Internationale Veröffentlichungsnummer: WO 2021/069403

(56) Entgegenhaltungen:
- US-A1- 2019 119 150
- ZHU FUQUAN ET AL: "Free-space optical communication link using perfect vortex beams carrying orbital angular momentum (OAM)", OPTICS COMMUNICATIONS, Bd. 396, 18. März 2017 (2017-03-18), Seiten 50-57, XP029976590, ISSN: 0030-4018, DOI: 10.1016/J.OPTCOM.2017.03.023
- PORFIREV A ET AL: "Non-ring perfect optical vortices withp-th order symmetry generated using composite diffractive optical elements", APPLIED PHYSICS LETTERS, A I P PUBLISHING LLC, US, Bd. 113, Nr. 17, 23. Oktober 2018 (2018-10-23), XP012232613, ISSN: 0003-6951, DOI: 10.1063/1.5052274 [gefunden am 2018-10-23]
- MACHADO FEDERICO ET AL: "Multiplexing THz Vortex Beams With a Single Diffractive 3-D Printed Lens", IEEE TRANSACTIONS ON TERAHERTZ SCIENCE AND TECHNOLOGY, IEEE, PISCATAWAY, NJ, USA, Bd. 9, Nr. 1, 1. Januar 2019 (2019-01-01), Seiten 63-66, XP011696295, ISSN: 2156-342X, DOI: 10.1109/TTHZ.2018.2883831 [gefunden am 2019-01-09]

## Beschreibung

Die vorliegende Erfindung betrifft ein Verfahren zur Erzeugung von Löchern in einem Material. Ferner betrifft die Erfindung eine Laserbearbeitungsanlage mit einem Strahlformungselement.

Bei der transparenten Laserbearbeitung werden mit Laserstrahlung Modifikationen in einem Material, das im Wesentlichen transparent für die Laserstrahlung ist und hierin als transparentes Material bezeichnet wird, erzeugt. Eine im Volumen des Materials eintretende Absorption (kurz Volumenabsorption) der Laserstrahlung kann bei transparenten Materialen beispielsweise zum Bohren, zum Trennen durch induzierte Spannungen, zum Schweißen, zum Bewirken einer Modifikation des Brechungsverhaltens oder für selektives Laserätzen eingesetzt werden. Siehe hierzu zum Beispiel die Anmeldungen US2019119150,

WO 2016/079062 A1, WO 2016/079062 A1 und WO 2016/079275 A1 der Anmelderin.

In diesen Einsatzfeldern kann es wichtig sein, sowohl eine Geometrie als auch die Art der Modifikation im Material geeignet kontrollieren zu können. Neben Parametern wie Laserwellenlänge, zeitliche Pulsform, Anzahl der Pulse und Pulsenergie kann dabei die Strahlform relevant sein.

Beispielsweise können Ultrakurzpulslaser-basierte Glasmodifikationsprozesse zum Trennen oder selektiven Laserätzen (selective laser etching SLE) von Glas mit langgezogenen Fokusverteilungen durchgeführt. Langgezogene Fokusverteilungen werden z.B. mit Bessel-Strahl-ähnlichen Strahlprofilen erzeugt. Derartige langgezogene Fokusverteilungen können längliche Modifikationen im Material ausbilden, die sich im Inneren des Materials in Propagationsrichtung der Laserstrahlung erstrecken.

Strahlformungselemente und Optik-Aufbauten, mit denen in Strahlausbreitungsrichtung langgezogene, schlanke Strahlprofile mit hohem Aspektverhältnis für die Laserbearbeitung bereitgestellt werden können, werden z.B. in der genannten WO 2016/079062 A1 beschrieben. Beim selektiven Laserätzen werden Mikrostrukturierungen durch mit einem Laser eingebrachte Modifikationen im Material und einen sich anschließenden nass-chemischen Ätzprozess erzeugt. Ein aggressives Ätzmedium bricht dabei chemische Bindungen des zu bearbeitenden Materials auf, wobei dies im Wesentlichen nur in den Bereichen der eingebrachten Modifikation(en) erfolgt. Entsprechend löst sich nur dort das bearbeitete (modifizierte) Material im Ätzmedium. Bei derartigen nass-chemischen Ätzverfahren hängt die absolute Ätzrate unter anderem von der Ätztemperatur und der Konzentration der ätzenden Flüssigkeit (der Ätze) sowie von den strukturellen Defekten im zu ätzenden Material (d.h. in den Modifikationen) ab.

Einem Aspekt dieser Offenbarung liegt die Aufgabe zugrunde, Mikrolöcher mit einem Durchmesser im Bereich von 100 µm und kleiner in ein Dünnglas und insbesondere ein Dünnstglas (allgemein ein Glasmaterial geringer Dicke, z.B. mit Dicken im Bereich von einigen Mikrometern bis zu einigen 100 Mikrometern oder einigen Millimetern, einzubringen. Zumindest eine dieser Aufgaben wird gelöst durch ein Verfahren nach Anspruch 1, ein diffraktives optisches Strahlformungselement nach Anspruch 11 und eine Laserbearbeitungsanlage nach Anspruch 15.

In einem Aspekt dieser Offenbarung umfasst ein Verfahren zum selektiven laserinduzierten Ätzen eines Mikrolochs in ein Werkstück die Schritte:
Erzeugen einer Modifikation im Werkstück, die sich von einer Eintrittsseite bis zu einer Austrittsseite des Werkstücks erstreckt, wobei die Modifikation mit einem Laserpuls erzeugt wird, der eine ringförmige transversale Intensitätsverteilung aufweist, die sich in einer Ausbreitungsrichtung des Laserstrahls mindestens über eine Länge erstreckt, die zu einer Ausbildung der Modifikation von der Eintrittsseite bis zur Austrittsseite (61B) des Werkstücks führt, wobei die Modifikation einen zylinderförmigen Körper von einem die Modifikation umgebenden Restmaterial abgrenzt, und
Einbringen des Werkstücks mit der Modifikation in ein nass-chemisches Ätzbad zum strukturellen Trennen des zylinderförmigen Körpers vom Restmaterial.

In einem weiteren Aspekt umfasst eine Laserbearbeitungsanlage für die Bearbeitung eines Werkstücks mit einem Laserstrahl durch Modifizieren eines Materials des Werkstücks in einer Fokuszone des Laserstrahls, die in einer Ausbreitungsrichtung des Laserstrahls langgezogen ausgebildet ist:
eine Laserstrahlquelle, die einen Laserstrahl ausgibt, und
ein optisches System, das
   - ein hierin offenbartes diffraktives optisches Strahlformungselement oder eine Kombination eines Axicon zum Aufprägen einer Axicon-Phasenverteilung und einer Phasenschraubenplatte zum Aufprägen einer Vortex-Phasenverteilung oder eine Kombination eines Axicon zum Aufprägen einer Axicon-Phasenverteilung und einer Flügelstrahl-Phasen-Platte zum Aufprägen einer Flügelstrahl-Phasenverteilung und
   - einen Bearbeitungskopf mit einer Fokussierlinse aufweist.

Das diffraktive optische Strahlformungselement ist im Strahlengang des Laserstrahls angeordnet, um dem Laserstrahl eine zweidimensionale Phasenverteilung aufzuprägen, und die zweidimensionale Phasenverteilung ist dazu eingerichtet, eine Ausbildung der langgezogenen Fokuszone im Material durch Fokussieren des Laserstrahls mit der Fokussierlinse zu bewirken, wobei zur Erzeugung einer Modifikation, insbesondere mit einem Laserpuls oder einer Mehrzahl von Laserpulsen, die Fokuszone eine ringförmige, insbesondere kreisringförmige oder elliptisch-ringförmige, transversale Intensitätsverteilung aufweist, die sich in einer Ausbreitungsrichtung des Laserstrahls mindestens über eine Länge erstreckt, die zu einer Ausbildung der Modifikation von einer Eintrittsseite des Materials bis zu einer Austrittsseite des Materials führt, wobei die Modifikation einen zylinderförmigen, insbesondere kreiszylinderförmigen oder elliptisch-ringzylinderförmigen, Körper von einem die Modifikation umgebenden Restmaterial abgrenzt. Ferner umfasst die Laserbearbeitungsanlage ein nass-chemisches Ätzbad zum strukturellen Trennen des zylinderförmigen Körpers vom Restmaterial.

In einigen Weiterbildungen des Verfahrens kann die Modifikation sich in einem Hohlzylinder, der im Querschnitt senkrecht zur Ausbreitungsrichtung einen Kreisring oder einen elliptischen Ring ausbildet, erstrecken, und der zylinderförmige Körper kann die Form eines Kreiszylinders oder eines elliptischen Zylinders aufweisen.

In einigen Weiterbildungen kann die ringförmige transversale Intensitätsverteilung eine kontinuierlich um die Ausbreitungsrichtung des Laserstrahls verlaufende Intensitätszone aufweisen, die als Modifikation eine zylindermantelförmige Modifikationszone im Material des Werkstücks erzeugt. Optional kann die zylindermantelförmige Modifikationszone im Querschnitt senkrecht zur Ausbreitungsrichtung einen Kreisring oder einen elliptischen Ring ausbilden.

In einigen Weiterbildungen kann die ringförmige transversale Intensitätsverteilung mehrere, auf Azimutalwinkelbereiche um die Ausbreitungsrichtung des Laserstrahls begrenzte Intensitätszonen aufweisen, die als Modifikation eine Mehrzahl von in der Ausbreitungsrichtung des Laserstrahls und auf einer Zylindermantelfläche um die Ausbreitungsrichtung des Laserstrahls verlaufenden Modifikationszonen im Material des Werkstücks erzeugen. Optional kann die Mehrzahl von Modifikationszonen im Querschnitt senkrecht zur Ausbreitungsrichtung einen Kreisring oder einen elliptischen Ring ausbilden.

In einigen Weiterbildungen kann die Modifikation eine strukturelle Veränderung des Materials des Werkstücks darstellen, die das Material von einem nicht-ätzbaren Zustand des nicht-modifizierten Materials in einen ätzbaren Zustand des modifizierten Materials überführt, und, wobei die Modifikation insbesondere durch eine Zunahme der nass-chemischen Ätzbarkeit im Vergleich zum nicht-modifizierten Material gekennzeichnet ist.

In einigen Weiterbildungen des Verfahrens kann zum Erzeugen der zylindermantelförmigen Modifikation ein Laserpuls oder eine Mehrzahl von Laserpulsen mit identischen transversalen Intensitätsverteilungen und longitudinalen Intensitätsverteilungen eingestrahlt werden. Die Mehrzahl von Laserpulsen kann insbesondere als ein Burst von Laserpulsen mit zeitlichen Abständen im Bereich von einigen Nanosekunden oder als Sequenz von zeitlich beabstandeten Laserpulsen oder Bursts von Laserpulsen mit zeitlichen Abständen im Bereich von bis zu einigen 100 Mikrosekunden auf das Werkstück auftreffen. Dabei trifft die Mehrzahl von Laserpulsen insbesondere am gleichen Ort auf, um einen Überlapp von zugehörigen Wechselwirkungsbereichen zu gewährleisten.

In einigen Weiterbildungen kann das Verfahren ferner umfassen ein Aufprägen einer transversalen Phasenverteilung auf den Laserstrahl, die nach Fokussieren des Laserstrahls zu der ringförmigen transversalen Intensitätsverteilung führt. Die ringförmige transversale Intensitätsverteilung kann insbesondere in einer Kreisringform einen Kreisdurchmesser aufweisen, der entlang einer Ausbreitungsrichtung des Laserstrahls im Werkstück im Wesentlichen unverändert bleibt, oder in einer elliptischen Ringform einen minimalen Durchmesser und einen maximalen Durchmesser aufweisen, die entlang einer Ausbreitungsrichtung des Laserstrahls im Werkstück im Wesentlichen unverändert bleiben.

In einigen Weiterbildungen des Verfahrens kann die Phasenverteilung mit einem hierin offenbarten diffraktiven optischen Strahlformungselement oder durch eine Kombination eines Axicon zum Aufprägen einer Axicon-Phasenverteilung und einer Phasenschraubenplatte zum Aufprägen einer Vortex-Phasenverteilung oder durch eine Kombination eines Axicon zum Aufprägen einer Axicon-Phasenverteilung und einer Flügelstrahl-Phasen-Platte zum Aufprägen einer Flügelstrahl-Phasenverteilung geformt werden.

In einigen Weiterbildungen kann
- das Werkstück ein Dünnglas und insbesondere ein Dünnstglas sein und/oder
- der Laserpuls ein Ultrakurzpuls sein, insbesondere mit Pulslängen von einigen Pikosekunden und kürzer, insbesondere im Bereich von einigen bis zu einigen hundert Femtosekunden, und/oder
- die ringförmige transversale Intensitätsverteilung und damit das Mikroloch im Fall einer kreisförmigen transversalen Grundform einen Kreisdurchmesser oder im Fall einer elliptischen transversalen Grundform einen maximalen Durchmesser kleiner gleich 500 µm aufweisen und/oder

das Werkstück eine Dicke in Ausbreitungsrichtung des einfallenden Laserstrahls kleiner gleich 2 mm, insbesondere im Bereich von 5 µm bis 2 mm oder im Bereich von 10 µm bis 200 µm, aufweisen und/oder
das Material des Werkstücks für den Laserstrahl weitgehend transparent sein.

In einigen Weiterbildungen kann das Verfahren ferner umfassen ein Bewirken einer Relativbewegung zwischen dem Werkstück und dem Laserstrahl zum Erzeugen einer Anordnung von Mikrolöchern.

In einigen Weiterbildungen der Laserbearbeitungsanlage können die periodischen Gitterfunktionen jeweils einen Anteil eines Sägezahngitterphasenverlaufs aufweisen, wobei eine Steigung eines Anstiegsbereichs in jedem der Sägezahngitterphasenverläufe einem vorbestimmten Axicon-Winkel entspricht, der dem diffraktiven optischen Strahlformungselement zugeordnet ist. Dabei kann der vorbestimmte Axicon-Winkel im Bereich von 0,5° bis 40° für eine Erzeugung eines realen Bessel-Strahl-Zwischenfokus mit dem Laserstrahl strahlabwärts des diffraktiven optischen Strahlformungselements oder im Bereich von (-0,5)° bis (-40)°für ein Zugrundelegen eines virtuellen Bessel-Strahl-Zwischenfokus strahl aufwärts des diffraktiven optischen Strahlformungselements liegen.

In einigen Weiterbildungen der Laserbearbeitungsanlage kann die periodischen Gitterfunktionen jeweils einen Anteil einer zweidimensionalen Kollimationsphasenverteilung, insbesondere einer zweidimensionalen fokussierenden Phasenverteilung, aufweisen, die bezüglich der Strahlmittenposition radialsymmetrisch ausgebildet ist.

In einigen Weiterbildungen kann die Laserbearbeitungsanlage ferner eine Werkstückhalterung umfassen, wobei optional eine relative Positionierbarkeit des Bearbeitungskopfs und eines von der Werkstückhalterung bereitgestellten Werkstücks als zu bearbeitendes Material vorgesehen ist.

In einigen Weiterbildungen der Laserbearbeitungsanlage kann die zweidimensionale Phasenverteilung dazu eingerichtet, dass die ringförmige transversale Intensitätsverteilung eine kontinuierlich um die Ausbreitungsrichtung des Laserstrahls verlaufende Intensitätszone oder mehrere, auf Azimutalwinkelbereiche um die Ausbreitungsrichtung des Laserstrahls begrenzte Intensitätszonen aufweisen. Optional kann die Modifikation im Querschnitt senkrecht zur Ausbreitungsrichtung des Laserstrahls einen durchgehenden oder einen unterbrochenen Kreisring oder einen durchgehenden oder einen unterbrochenen elliptischen Ring ausbilden. Erfindungsgemäß werden durch den Einsatz eines Bessel-Strahl-ähnlichen Strahls höherer Ordnung Mikroloch-Konturen mittels eines einzelnen Laserpulses oder mehreren aufeinanderfolgenden Laserpulsen, die mit identischen Strahlprofilen am identischen Ort auftreffen, alternativ mit einem oder mehreren Bursts aus Laserpulsen, die mit identischen Strahlprofilen am identischen Ort auftreffen, für ein nass-chemisches Ätzverfahren vorbereitet. Der Bessel-Strahl höherer Ordnung modifiziert dabei das Material auf einer Zylindermantelfläche (azimutal durchgehen oder zumindest in Azimutalwinkelabschnitten), die ein herauszulösendes Innenvolumen umgibt. Das Material in diesem Innenvolumen kann durch einen anschließenden Ätzprozess vom umgebenden Restmaterial gelöst werden und bildet eine Art Mikro-Bohrkern. Der Bohrkern kann aus dem Restmaterial entfernt werden (beispielsweise durch das Ätzmedium ausgespült werden), sodass ein Mikroloch im Restmaterial verbleibt. Erstrecken sich die Modifikationszonen in Azimutalwinkelabschnitten, sodass Materialbrücken zwischen dem Restmaterial und dem Bohrkern bestehen bleiben, kann zusätzlich eine die Materialbrücken lösende Kraft erforderlich sein.

Die hierin offenbarten Konzepte erlauben ein Herauslösen kleiner Konturen und Löcher aus transparenten Werkstoffen wie Glas, transparenten Keramiken, Saphir, Glaskeramik, etc. Dabei kann die Ausbildung der Mikrolöcher mit hoher Produktivität und kleinen Lochdurchmessern (z.B. im Bereich von 5 µm bis 500 µm, besonders bevorzugt 2 µm bis 200 µm) erfolgen. Entsprechend werden die hierin offenbarten Konzepte auch als optisches Laserstanzen bezeichnet.

Die hierin beschriebenen Konzepte verwenden (dreidimensionale) Strahlprofile, die beugungsfrei (nicht beugend) in Ausbreitungsrichtung ausgebildet werden. Da keine wesentliche Änderung der Intensität im Strahlprofil entlang der Ausbreitungsrichtung vorliegt, können in Ausbreitungsrichtung kontinuierlich ausgebildete Modifikationen im Material erzeugt werden. Derartige Modifikation können sich durchgehend durch ein Werkstück geringer Dicke erstrecken und so zum Beispiel für die Ausbildung von Mikrolöchern in Dünngläsern und Dünnstglässern genutzt werden. Ein Dünnglas weist Materialdicken im Bereich von wenigen Mikrometern bis zu einigen Millimetern auf und wird im unteren Dickenbereich auch als Dünnstglas bezeichnet, beispielsweise weisen Dünnstgläser Dicken im Bereich von 5 µm bis zu einigen 100 µm, insbesondere im Bereich von 10 µm bis 200 µm, wie z.B. 30 µm, auf.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische Skizze eines Lasersystems mit einem strahlformenden Element zur Bearbeitung eines Werkstücks mit einer sich durch das Werkstück erstreckenden Fokuszone,
- Fig. 2A bis 2D: schematische Darstellungen zur Verdeutlichung einer flächigen Phasenverteilung eines strahlformenden Elements zur Erzeugung einer zylindermantelförmigen Fokuszone sowie einer kontinuierlich ringförmigen transversalen Intensitätsverteilung,
- Fig. 3A und 3B: eine transversale und eine longitudinale berechnete Intensitätsverteilung einer zylindermantelförmigen Fokuszone mit 10 µm Durchmesser, wie sie mit einer Phasenverteilung der Fig. 2A in einem Material erzeugt werden können,
- Fig. 3B und 3D: eine transversale und eine longitudinale berechnete Intensitätsverteilung einer zylindermantelförmigen Fokuszone mit 40 µm Durchmesser, wie sie mit einer Phasenverteilung der Fig. 3A in einem Material erzeugt werden können,
- Fig. 4: ein Flussdiagramm zur Verdeutlichung eines Verfahrens zum Laserstanzen eines Mikrolochs,
- Fig. 5A und 5B: Aufnahmen von mit Laserpulsen erzeugten Mikrolöchern,
- Fig. 6: Aufnahme eines Werkstücks mit drei Modifikationen,
- Fig. 7A bis 7C: schematische Darstellungen zur Verdeutlichung einer flächigen Phasenverteilung eines strahlformenden Elements zur Erzeugung einer azimutal in Abschnitte unterteilten zylindermantelförmigen Fokuszone sowie einer ringförmigen transversalen Intensitätsverteilung mit auf Azimutalwinkelbereiche begrenzten Intensitätszonen,
- Fig. 8A und 8B: schematische Darstellungen zur Verdeutlichung einer Phasenverteilung eines strahlformenden Elements zur Erzeugung einer Fokuszone mit elliptischer Querschnittsfläche und
- Fig. 8C und 8D: eine transversale und eine longitudinale berechnete Intensitätsverteilung einer azimutal in Abschnitte unterteilten Fokuszone mit elliptischer Querschnittsfläche.

Hierin beschriebene Aspekte basieren zum Teil auf der Erkenntnis, dass beim Modifizieren kleiner Konturen durch Scannen einer konventionellen Bessel-Strahl-Fokuszone, wie sie z.B. in den eingangs genannten Anmeldungen der Anmelderin beschrieben werden, Abschirmeffekte durch bereits modifiziertes Material eintreten können. Beispielsweise kann eine Modifikation in der Tiefe des Materials (am Ende der Fokuszone) beeinflusst und im Extremfall nicht mehr bewirkt werden. Der Einsatz derartiger Bessel-Strahlen nullter Ordnung ist insbesondere abhängig vom Aspektverhältnis und der Materialstärke des zu bearbeitenden Materials. Ein Durchmesser einer mit einer Scantrajektorie auszuschneidenden Geometrie (Lochkontur) kann bei der Verwendung derartiger Bessel-Strahl-ähnlicher Strahlen nullter Ordnung Grenzen unterliegen.

Die hierin vorgeschlagenen Konzepte verwenden nun nicht ein Scannen der Laserstrahlung entlang einer Lochkontur, sondern setzen ein speziell geformtes Strahlprofil ein. Das Strahlprofil ist zylinderartig ausgebildet. D.h., die Laserparameter sind so eingestellt, dass entlang einer Zylinderwandgeometrie (azimutal kontinuierlich oder zumindest azimutal abschnittsweise) hohe Intensitäten, d.h. oberhalb einer Schwellfluenz/-intensität dieses Materials, vorliegen. Das Strahlprofil ist ferner derart Bessel-Strahl-artig, dass ein Energie-Eintrag in den Bereich der Zylinderwand lateral von außen erfolgt, so dass sowohl ein erster Laserpuls bei der Ausbildung der Modifikation in Ausbreitungsrichtung als auch das weitere Modifizieren mit nachfolgenden Laserpulsen am gleichen Ort nicht durch die vorausgehend erzeugte Modifikation beeinflusst werden.

Im nachfolgend beschriebenen Verfahren werden in einem ersten Schritt beispielsweise eine Modifikation in das Werkstück eingeschrieben, wobei jede Modifikation zur Ausbildung eines Mikrolochs vorgesehen ist. In einem zweiten Schritt erfolgt dann ein Ätzvorgang. Dabei wirkt das Ätzmedium entlang der Modifikation in das Materialinnere hinein und löst das Innere des Mikrolochs vom Restmaterial. Beispielsweise werden die Ätzverfahren im zweiten Schritt über einen Zeitraum von einigen Minuten oder Stunden und in einem Ätzmedium wie KOH durchgeführt. Zeitraum und Ätzmedium sind auf das Material sowie auf die Modifikationen abstimmbar.

Die Erfinder haben erkannt, dass insbesondere auch durch das Einstrahlen einer Mehrzahl von aufeinanderfolgenden Pulsen (mit gleichem Strahlprofil am gleichen Ort) die Erzeugung eines Mikrolochs mit höherer Genauigkeit und besserer Oberflächenbeschaffenheit ermöglicht wird.

Überdies können niedrigere Pulsintensitäten verwendet werden, da sich die Ausbildung einer zylindermantelförmigen Struktur der Modifikation Puls für Puls kumulieren kann.

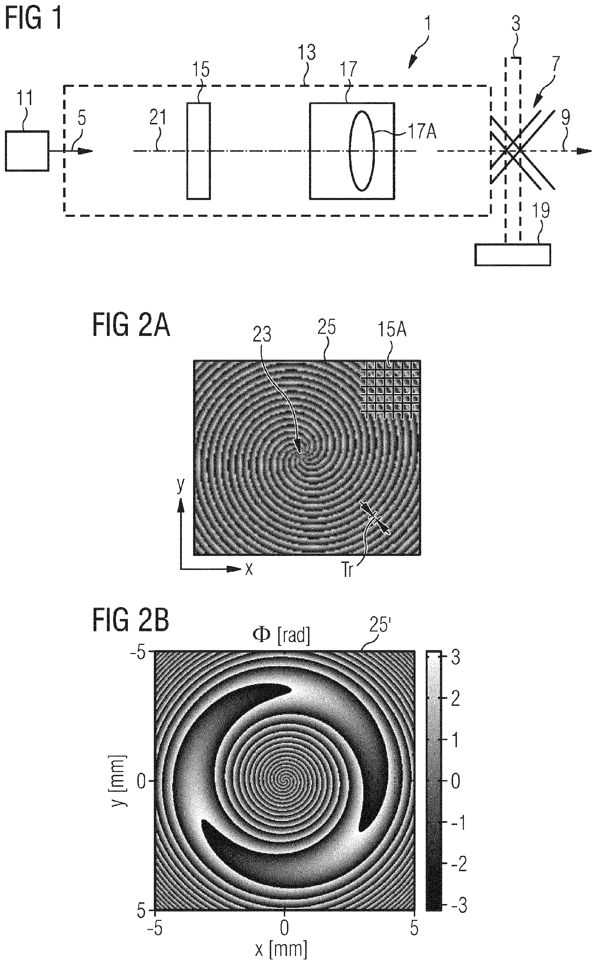

Ein Laserstanzen von Mikrolöchern wird nachfolgend beispielhaft mit Bezug auf die Figuren 1 bis 8 beschrieben.

Fig.1 zeigt eine schematische Darstellung einer Laserbearbeitungsanlage 1 für die Bearbeitung eines Materials 3 mit einem Laserstrahl 5. Die Bearbeitung bewirkt ein Modifizieren des Materials 3 in einer Fokuszone 7. Wie in Fig. 1 angedeutet kann die Fokuszone 7 allgemein in einer Ausbreitungsrichtung 9 des Laserstrahls 5 langgezogen ausgebildet werden. Beispielsweise ist die Fokuszone 7 eine Fokuszone eines "modifizierten" Bessel-Strahls oder eines "modifizierten" inversen Bessel-Strahls, wie sie sich in einem im Wesentlichen transparenten Material ausbilden kann. Dabei sind die Bessel-Strahlen derart modifiziert, dass sie die nachfolgend erläuterten Strahlprofile, insbesondere auf einer Zylindermantelfläche vorliegende Intensitätsmaxima, aufweisen.

Die Laserbearbeitungsanlage 1 umfasst eine Laserstrahlquelle 11, die den Laserstrahl 5 erzeugt und ausgibt. Der Laserstrahl 5 ist beispielsweise gepulste Laserstrahlung. Laserpulse weisen z.B. Pulsenergien auf, die zu Pulsspitzenintensitäten führen, die eine Volumenabsorption im Material 3 und damit eine Ausbildung der Modifikation in einer gewünschten Geometrie bewirken.

Zur Strahlformung und Führung umfasst die Laserbearbeitungsanlage 1 ferner ein optisches System 13. Das optische System 13 umfasst ein diffraktives optisches Strahlformungselement 15 (oder ein eine entsprechende Phasenverteilung aufprägendes, optisches System aus mehreren zusammenwirkenden optischen Elementen) und einen Bearbeitungskopf 17 mit einer Fokussierlinse 17A.

In Fig. 1 nicht gezeigt sind weitere strahlführende Komponenten des optischen Systems 13 wie zum Beispiel Spiegel, Linsen, Teleskopanordnungen, Filter sowie Steuerungsmodule zur Ausrichtung der verschiedenen Komponenten.

Schließlich umfasst die Laserbearbeitungsanlage 1 eine schematisch angedeutete Werkstückhalterung 19 zum Lagern eines Werkstücks. In Fig. 1 ist das Werkstück das zu bearbeitende Material 3. Es kann beispielsweise eine dünne Glasscheibe oder eine für die eingesetzte Laserwellenlänge weitgehend transparente dünnen Scheibe in keramischer oder kristalliner Ausführung (beispielsweise aus Saphir oder Silizium) als Beispiele für Dünnglas- bzw. Dünnstglas-Materialbearbeitung sein. Für die Bearbeitung des Materials 3 erfolgt eine Relativbewegung zwischen dem optischen System 13 und dem Material 3, sodass die Fokuszone 7 in das Werkstück an verschiedenen Positionen zur Ausbildung einer Anordnung von mehreren Modifikationen eingestrahlt werden kann.

Allgemein wird der Laserstrahl 5 durch Strahlparameter wie Wellenlänge, spektrale Breite, zeitliche Pulsform, Ausbildung von Pulsgruppen (Bursts), Strahldurchmesser, transversales Strahlprofil/Eingangsintensitätsprofil, transversales Eingangsphasenprofil, Eingangsdivergenz und/oder Polarisation bestimmt.

Beispielhafte Parameter des Laserstrahls 5 sind:
Wellenlänge: z.B. 1030 nm
Pulsdauer einige Pikosekunden (beispielsweise 3 ps) und kürzer, beispielsweise einige hundert oder einige (zehn) Femtosekunden
Pulsenergien z.B. im mJ-Bereich, zwischen 20 µJ und 2 mJ (z.B. 1200 µJ), typischerweise zwischen 100 µJ und 1 mJ
Anzahl der Pulse im Burst: mehrere Pulse in einem Burst möglich, z.B. 1 bis 4 Pulse pro Burst mit einem zeitlichen Abstand im Burst von einigen Nanosekunden (z.B. ca. 17 ns)
Anzahl der Pulse pro Modifikation: ein Puls oder mehrere PulseBursts für eine Modifikation möglich, z.B. 2, 5 oder 10 Pulse mit z.B. einem zeitlichen Abstand von 100 µs (10 kHz), 20 µs und 1 ms (1 kHz) zwischen zwei aufeinanderfolgenden Pulsen. Durch Variation des zeitlichen Abstandes zwischen den Pulsen und/oder der Anzahl der Pulse pro Modifikation kann die Ätzbarkeit einer Materialmodifikation beeinflusst werden.

Gemäß Fig. 1 wird der Laserstrahl 5 dem optischen System 13 zur Strahlformung, d.h. zum Umwandeln eines oder mehrerer der Strahlparameter, zugeführt. Üblicherweise wird für die Lasermaterialbearbeitung der Laserstrahl 5 angenähert ein kollimierter Gaußscher Strahl mit einem transversalen Gaußschen Intensitätsprofil sein, der von der Laserstrahlquelle 11, beispielsweise einem Ultrakurzpuls-Hochleistungslasersystem, erzeugt wird. Hinsichtlich der einsetzbaren Laserstrahlung wird beispielhaft auf die in den eingangs genannten Anmeldungen der Anmelderin beschriebenen Lasersysteme und Parameter verwiesen.

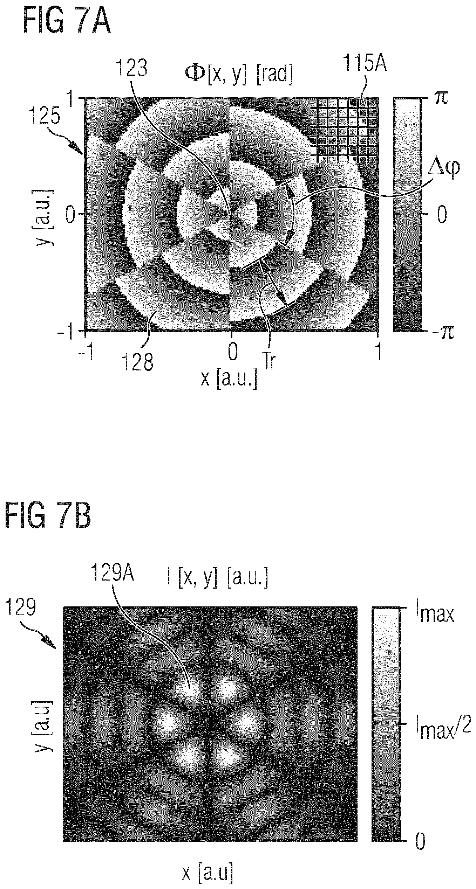

Dem optischen System 13 wird üblicherweise eine optische Achse 21 zugeordnet, die bevorzugt durch einen Symmetriepunkt des Strahlformungselements 15 (z.B. durch eine Strahlmittenposition 23 des diffraktiven optischen Strahlformungselements 15, siehe Fig. 2A, oder durch eine Strahlmittenposition 123 des diffraktiven optischen Strahlformungselements 115, siehe Fig. 7A) verläuft. Bei einem rotationssymmetrischen Laserstrahl 5 kann eine Strahlmitte eines transversalen Strahlprofils des Laserstrahls 5 entlang der optischen Achse 21 des optischen Systems 13 auf die Strahlmittenposition 23 einfallen.

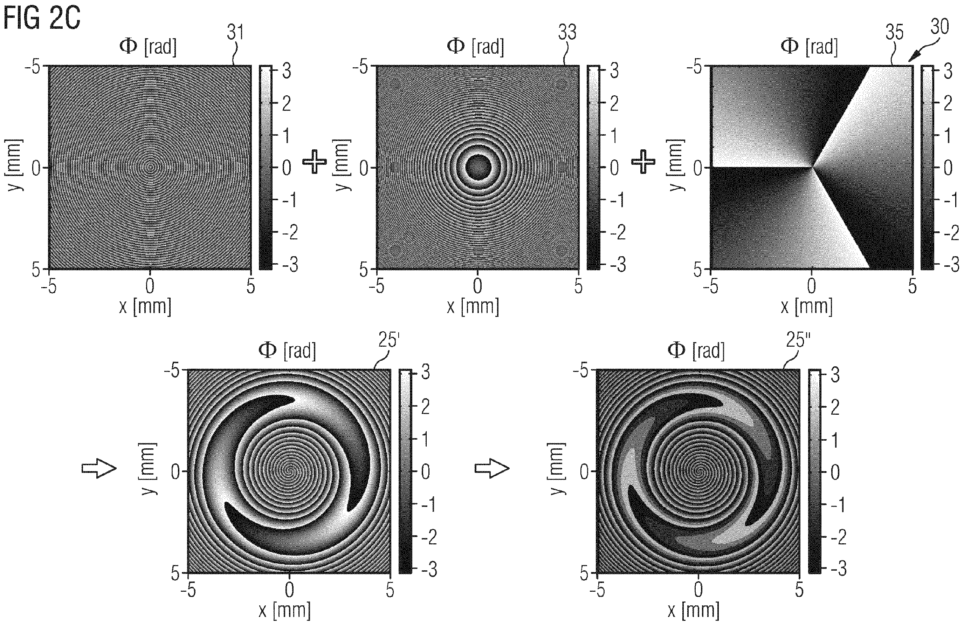

Das Strahlformungselement 15 ist z.B. ein räumlicher Lichtmodulator (SLM spatial light modulator). Es kann beispielsweise als ein fest eingeschriebenes diffraktives optisches Element ausgeführt sein. Ferner kann das Strahlformungselement 15 elektronisch durch ein zeitabhängiges Einstellen eines programmierbaren diffraktiven optischen Elements umgesetzt werden. Üblicherweise sind derartige Strahlformungselemente digitalisierte Strahlformungselemente, die zum Aufprägen eines Phasenverlaufs (einer zweidimensionalen Phasenverteilung) auf ein transversales Strahlprofil eines Laserstrahls ausgelegt sind. Die Digitalisierung kann dabei die Verwendung von diskreten Werten für die Phasenschiebung und/oder die transversale Gitterstruktur betreffen. Alternativ kann die Phasenverteilung mit einer Kombination aus einer Axicon-Optik und einer Phasenplatte (die z.B. als fest eingeschriebenes diffraktives optisches Element ausgebildet ist) erzeugt werden (siehe z.B. Fig. 2C).

Allgemein kann ein einstellbares diffraktives optisches Strahlformungselement sehr feine Phasenänderungen (sehr kleine Unterschiede der Phasenschiebungswerten in benachbarten Flächenelementen) bei einer lateral gröberen Auflösung (größere Flächenelemente/Bereiche eines Phasenschiebungswertes) erlauben, im Unterschied zu beispielsweise einem lithographisch hergestellten, fest eingeschriebenen diffraktiven optischen Element. Bei einem einstellbaren Strahlformungselement (z.B. einem SLM) kann die Phasenmodulation durch eine lokale Änderung des Brechungsindex erreicht werden. Die Phasenmodulation in einem fest eingeschriebenes (statischen) Strahlformungselement kann durch eine lokale Änderung des zurückgelegten Weges durch ein z.B. geätztes Höhenprofil in beispielsweise Quarzglas erreicht werden. Ein fest eingeschriebenes diffraktives optisches Element kann z.B. planparallele Stufen aufweisen, wobei eine Materialdicke im Bereich einer Stufe (eines Flächenelements) das Ausmaß einer Phasenschiebung (d.h. den Phasenverschiebungswert) bestimmt. Die lithographische Herstellung der planparallelen Stufen kann eine hohe laterale Auflösung (kleinere Flächenelemente/Bereiche eines Phasenschiebungswertes) ermöglichen. Allgemein gibt ein Phasenschiebungswert eine einem Punkt oder einer Fläche zugeordnete Phase an, die Laserstrahlung bei der Wechselwirkung mit einem optischen System zur Phasenaufprägung erfährt, beispielsweise beim Durchtritt durch ein Flächenelement eines diffraktiven optischen Strahlformungselements.

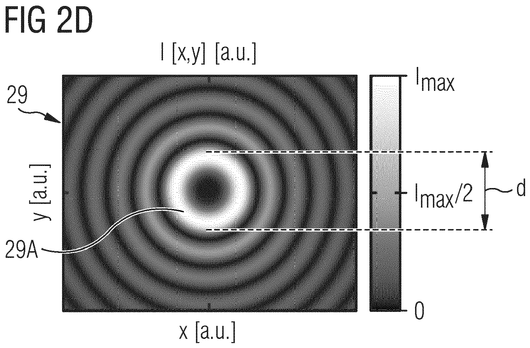

Je nach Ausführung eines Strahlformungselements kann es in Transmission oder in Reflexion verwendet werden, um einem Laserstrahl einen Phasenverlauf aufzuprägen. Allgemein können die hierin vorgeschlagenen Strahlformungselemente beispielsweise in den in den eingangs genannten Anmeldungen beschriebenen Optik-Aufbauten der Anmelderin eingesetzt werden. In Zusammenhang mit den Figuren 2 bis 8 werden die grundlegenden Merkmale beispielhaft erläutert.

Strukturelle, die Phasenaufprägung bewirkende und flächig ausgebildete Strahlformungselemente werden auch als Phasenmasken bezeichnet, wobei sich die Maske auf die Phase der zweidimensionalen Phasenverteilung bezieht.

Die zweidimensionale Phasenverteilung der hierin offenbarten Konzepte ist insbesondere für die Erzeugung (nach Fokussierung mit der Fokussierlinse 17A) einer langgezogenen Fokuszone ausgelegt. Eine Fokuszone entspricht einer dreidimensionalen Intensitätsverteilung, die in dem zu bearbeitenden Material 3 das räumliche Ausmaß der Wechselwirkung und damit das Ausmaß der Modifikation bestimmt. Als langgezogene Fokuszone wird somit in einem in Ausbreitungsrichtung 9 langgezogenen Bereich im Material 3 eine Fluenz/Intensität erzeugt, die über der für die Bearbeitung/Modifikation relevanten Schwellfluenz/-intensität dieses Materials liegt.

Üblicherweise spricht man von einer langgezogenen Fokuszone, wenn die dreidimensionale Intensitätsverteilung hinsichtlich einer Zielschwellintensität durch ein Aspektverhältnis (Ausdehnung in Ausbreitungsrichtung im Verhältnis zur lateralen Ausdehnung) von mindestens 10:1 und mehr, beispielsweise 20:1 und mehr oder 30:1 und mehr, z.B. auch größer 1000:1, gekennzeichnet ist. Eine derartige langgezogene Fokuszone kann zu einer Modifikation des Materials mit einem ähnlichen Aspektverhältnis führen. Allgemein kann bei derartigen Aspektverhältnissen eine maximale Änderung der lateralen Ausdehnung der (wirksamen) Intensitätsverteilung über die Fokuszone im Bereich von 50 % und weniger, beispielsweise 20 % und weniger, beispielsweise im Bereich von 10 % und weniger, liegen. Bei der erfindungsgemäßen Verwendung von zylinderwandförmigen Fokuszonen kann sich ein Aspektverhältnis insbesondere bei großen Durchmessern auf einen radialen Schnitt beziehen.

Insbesondere mit Bessel-Strahl-artigen Strahlprofilen kann die Energie im Wesentlichen über die gesamte Länge einer hervorzurufenden Modifikation lateral in die langgezogene Fokuszone (d.h. unter einem Winkel zur Ausbreitungsrichtung 9) für die Volumenabsorption eingebracht werden. In diesem Sinne kann ein Gaußscher Strahl keinen vergleichbaren langgezogenen Fokus erzeugen, da die Energiezufuhr im Wesentlichen longitudinal und nicht lateral erfolgt.

Mit Blick auf die Volumenabsorption bezieht sich die Transparenz eines für den Laserstrahl 5 "weitgehend transparenten" Materials hierin auf eine lineare Absorption. Für Licht unterhalb der Schwellfluenz/-intensität kann ein für den Laserstrahl 5 weitgehend transparentes Material beispielsweise auf einer Länge einer hervorzurufenden Modifikation z.B. weniger als 20 % oder sogar weniger als 10 % des einfallenden Lichts absorbieren.

Zurückkommend auf die Strahlformung zeigt Fig. 2A schematisch eine Phasenverteilung 25 eines fest eingeschriebenen diffraktiven optischen Strahlformungselements 15. Fig. 2B zeigt eine Phasenverteilung 25', die zusätzlich einen Phasenanteil zur Integration einer Linse in das Strahlformungselement aufweist. Wenn eine "Linse" mit im Strahlformungselement eingeschrieben ist, kann sich eine fokussierende Wirkung ergeben. In diesem Fall kann man die Fourier-Transformierte des anliegenden optischen Feldes in Form einer Ringverteilung erhalten, z.B. mit konstanter oder modulierter azimutaler Abhängigkeit.

In den Figuren 2A bis 2C sind die zugrundeliegenden Phasenschiebungswerte (Phase in rad) von -π bis +π in Graustufen dargestellt. Wie nachfolgend erläutert weisen die Phasenverteilung 25 und allgemein die vorgenommene Phasenaufprägung zur Formung eines "Vortex"-Bessel-Strahls eine azimutale Phasenabhängigkeit auf.

Das Strahlformungselement 15 kann - ebenso wie ein im Sinne der Erfindung modifiziertes (insbesondere um eine Phasenplatte ergänztes) Axicon - im Strahlengang des Laserstrahls 5 zur Aufprägung einer Phase gemäß der Phasenverteilung 25 auf das transversale Strahlprofil des Laserstrahls 5 angeordnet werden.

In Fig. 2A sind Parameter der Phasenverteilung 25 und Parameter einer flächigen Gitterstruktur verdeutlicht, wobei die flächige Gitterstruktur die Phasenverteilung 25 umsetzt.

Die flächige Gitterstruktur kann mithilfe von aneinander angrenzenden Flächenelementen 15A aufgebaut werden. Hierin beziehen sich die Flächenelemente 15A auf räumliche Struktureinheiten der Gitterstruktur, mit denen eine voreingestellte Phasenschiebung für die auftreffende Laserstrahlung gemäß einem dem Flächenelement zugeordneten Phasenschiebungswert bewirkt werden kann. Ein Flächenelement 15A wirkt entsprechend auf einen zweidimensionalen Ausschnitt des transversalen Strahlprofils des Laserstrahls 5. Flächenelemente entsprechen dem zuvor angesprochenen Aspekt der Digitalisierung. Beispielhafte Flächenelemente 15A sind in Fig. 2A im oberen rechten Eck der Phasenverteilung 25 angedeutet, wobei das Größenverhältnis zwischen den beispielhaft rechteckigen Flächenelementen und der Phasenabhängigkeit von der Herstellung des Strahlformungselements abhängt.

Die Flächenelemente 15A bilden eine Vortex-artige Phasenentwicklung über die flächige Gitterstruktur aus.

In die Phasenverteilung 25 der Fig. 2A ist ferner die bereits angesprochene Strahlmittenposition 23 eingezeichnet, auf die die Mitte des einfallenden Laserstrahls 5 justiert wird. Die Strahlmittenposition 23 definiert eine radiale Richtung in der flächigen Gitterstruktur (in Fig 2A in der Zeichenebene beginnend an der Strahlmittenposition 23). Die Phasenverläufe bilden in radialer Richtung periodische Gitterfunktionen aus, wobei die Gitterfunktionen die gleiche Gitterperiode Tr in radialer Richtung aufweisen. Dabei liegt in radialer Richtung eine konstante Gitterperiode vor. Beispielsweise kann sich die Phase der radialen Phasenverläufe um 3×2π (allgemein ein z.B. ganzzahliges Vielfaches von π) über einen azimutalen Winkel von 2π ändern. Beispielsweise kann sich der radiale Phasenverlauf um 20×2π und mehr ändern. Entsprechend ändern sich Radialgitterphasen, die z.B. als Ursprungsphasenwerte den radialen Gitterfunktionen an der Strahlmittenposition 23 zugeordnet sind.

In einigen Ausführungsformen weisen die periodischen Gitterfunktionen jeweils einen Anteil eines Sägezahngitterphasenverlaufs auf. Bei einem Sägezahngitterverlauf weisen die Phasenschiebungswerte in radialer Richtung sich wiederholende zunehmende, abnehmende Bereich auf, die durch Phasenrückstellungen (z.B. Sprünge im Phasenschiebungswert) begrenzt sind, wobei die Anstiege/Abnahmen der Phasenschiebungswerte insbesondere linear verlaufen können (lineare Verläufe erlauben insbesondere eine Ausbildung eines beugungsfreien Strahls). Weitere Anteile im Phasenverlauf (z.B. der angesprochene und im Zusammenhang mit Fig. 2C diskutierte Fall einer gemultiplexten Linse) sind möglich, die den hierin offenbarten Konzepten überlagert werden können.

Als Beispiel für eine Integration eines weiteren Phasenanteils kann eine Phasenkomponente einer Fernfeldoptik, die im optischen System 13 strahlabwärts des Strahlformungselements 15 angeordnet ist, in die Phasenverteilung aufgenommen werden. So kann in die zweidimensionale Phasenverteilung eine Kollimationsphasenverteilung integriert werden, die beispielsweise radialsymmetrisch ausgebildet ist. (Siehe hierzu auch die eingangs genannten Anmeldungen der Anmelderin.)

Eine Steigung eines Anstiegsbereichs in den radialen Sägezahngitterphasenverläufen entspricht einem vorbestimmten Axicon-Winkel. Dieser ist dem diffraktiven optischen Strahlformungselement 15 zugeordnet und bestimmt die Ausbildung des Bessel-Strahls. Der vorbestimmte Axicon-Winkel ("reales Axicon") kann z.B. im Bereich von 0,5° bis 40°, besonders bevorzugt 1° bis 5° für eine Erzeugung eines realen Bessel-Strahl-Zwischenfokus mit dem Laserstrahl strahlabwärts des diffraktiven optischen Strahlformungselements liegen. Für ein Zugrundelegen eines virtuellen Bessel-Strahl-Zwischenfokus strahl aufwärts des diffraktiven optischen Strahlformungselements 15 kann der vorbestimmte Axicon-Winkel ("inverses Axicon") z.B. im Bereich von -0,5°) bis -40°, besonders bevorzugt -1° bis -5° liegen.

Zusammenfassend kann für die Erzeugung des für das optische Stanzen verwendbaren Strahlprofils ein Optikkonzept verwendet werden, das Bessel-Strahl-ähnliche Strahlen höherer Ordnung erzeugt.

Im Unterschied zu einer "punktförmigen" transversalen Intensitätsverteilung im Bearbeitungsbereich einer klassischen Bessel-Strahl-Fokuszone (Bessel-Strahl nullter Ordnung) wird eine "ringförmige" transversale Intensitätsverteilung eingesetzt, indem dem einfallenden Laserstrahl beispielsweise mit einem fest eingeschriebenen diffraktiven optischen Element oder einem einstellbaren räumlichen Lichtmodulator oder einer Kombination aus Axicon und Phasenplatte zur Vortex-Bildung eine hierzu notwendige zweidimensional transversale Phasenverteilung (siehe beispielhaft Fig. 2A) aufgeprägt wird. Hinsichtlich einer Kombination aus Axicon und Phasenplatte zur Flügelstrahl-Bildung siehe die Erläuterungen zu den Figuren 7A bis 7C.

Das diffraktive optische Element weist hierzu eine Phasenverteilung auf, die das angesprochene radialsymmetrische Sägezahngitter mit einer Vortexphasenmodulation multiplext (kombiniert), wobei die Vortexphasenmodulation einen linearen azimutalen Phasenanstieg (von 0 bis I × 2π, wobei I die Ladung ist) aufweist. Über die Ladung kann unter anderem die Größe des erzeugten transversalen Leistungsrings eingestellt werden. Aufgrund der zugrundeliegenden Bessel-Strahl-Charakteristik ändert sich der Durchmesser des transversalen Leistungsrings im Wesentlichen entlang der Ausbreitungsrichtung (Z-Achse in den Figuren) nicht.

Wie in Fig. 2C angedeutet kann ein derartiges transversales und longitudinales Strahlprofil auch refraktiv mit einem Axicon (einer Axicon-Phasenverteilung 31) und einer Phasenschraubenplatte 30 (mit einer Vortex-Phasenverteilung 35) umgesetzt werden.

Fig. 2C kann auch allgemein den Aufbau der Phasenverteilung 25' (und analog der Phasenverteilung 25 ohne Linsen-Phasenanteil) erläutern. Beispielhaft wird eine Phasenverteilung 31 eines inversen Axicons (zur Erzeugung eines inversen Besselstrahlprofils) in jedem Flächenelement mit einem Linsen-Phasenanteil einer Phasenverteilung 33 und einem Vortex-Phasenanteil der Vortex-Phasenverteilung 35 überlagert. Wird eine solche Phasenverteilung mit einem 4-Phasenmodel auf den Flächenelementen 15A umgesetzt, ergibt sich z.B. die Phasenverteilung 25".

Fig. 2D zeigt in einem transversalen (d.h. senkrecht zur Ausbreitungsrichtung der Laserstrahlung in der Fokuszone 7 verlaufenden) Schnitt eine beispielhafte ringförmige transversalen Intensitätsverteilung 29 (I(x, y)), wie sie mit einem Strahlformungselement erzeugt werden kann, das die flächige Phasenverteilung 25 zur Aufprägung auf einen Ultrakurzpuls-Laserstrahl aufweist. Die Phasenverteilung 25 wurde beispielsweise mit einem fest eingeschriebenen diffraktiven optischen Element oder einem einstellbaren räumlichen Lichtmodulator oder einer Kombination aus Axicon und Phasenschraubenplatte 30 auf den Laserstrahl aufgeprägt. Die sich ergebende Intensitätsverteilung 29 bildet einen durchgängigen Ring und weist eine kontinuierlich um die Ausbreitungsrichtung Z des Laserstrahls 5 verlaufende Intensitätszone 29A auf.

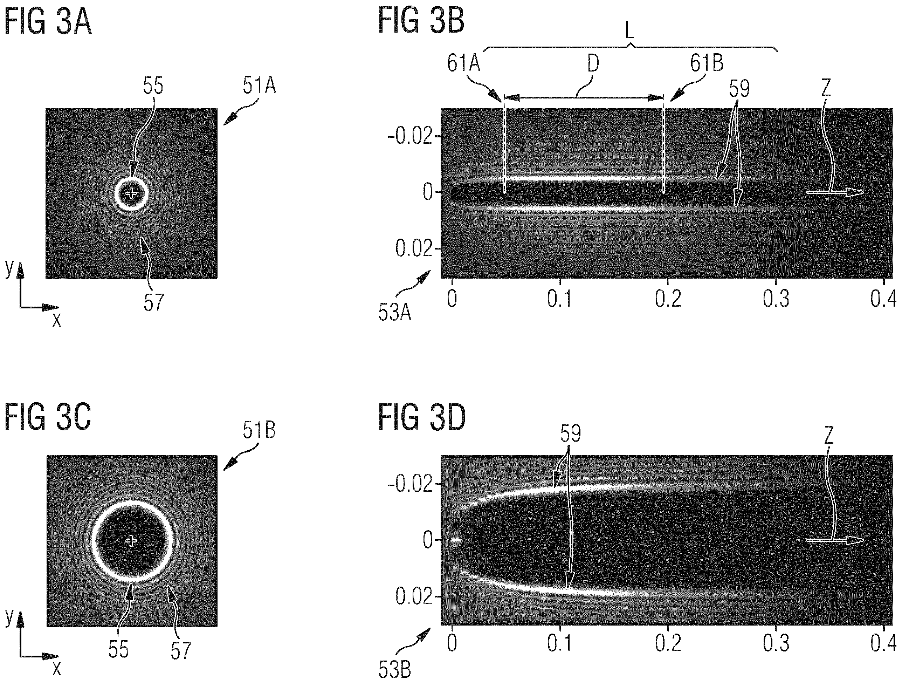

Zusammenfassend kann ein zylindrisches (Bessel-Vortex-) Strahlprofil durch Aufprägung einer Phasenverteilung 25 erzeugt werden, die sich durch Überlagern einer "Axicon"-Phase mit einer azimutalen Phasenkomponente ergibt. Bei einem zylindersymmetrischen (Bessel-Vortex-) Strahlprofil ergibt sich ein ringförmiges transversales Strahlprofil (siehe Fig. 3A und Fig. 3C), sodass sich im Material eine (geschlossene) Modifikation entlang einer Zylinderwandfläche ergibt.

Ferner kann die Phasenverteilung 25 (ebenso wie die in Zusammenhang mit den Figuren 7A bis 7C erläuterte beispielhafte Phasenverteilung 125) so ausgelegt sein, dass sie ein Strahlprofil erzeugt, das in Ausbreitungsrichtung im Wesentlichen beugungsfrei ist. Eine beugungsfreie Ausbildung kann erreicht werden, wenn die Phasenverteilung 25 (Phasenverteilung 125) in allen Richtungen die gleiche Gitterperiode aufweist. Hierbei bezieht sich die Bedingung der "gleichen Gitterperiode" auf die Phasenanteile zur Ausbildung der Fokuszone. Wie bereits angesprochen können weitere Phasenanteile z.B. zur Integration einer optischen Linse in das strahlformende Element integriert werden. Diese Phasenanteile weisen eigene Gitterstrukturen auf, wie sie beispielsweise für eine fokussierende (rotationssymmetrische) Phasenaufprägung bedingt wird.

In den Figuren 3A bis 3D werden beispielhaft zwei Intensitätsverteilungen gezeigt, wie sie sich nach Fokussierung des phasenaufgeprägten Strahls ergeben können. Die Figuren 3A und 3C zeigen Intensitätsringe in lateralen Schnitten (transversale X-Y-Strahlprofile 51A und 51B), die sich quer zur Ausbreitungsrichtung Z ausbilden und zu Fokuszonen mit Zylinderdurchmessern von ca. 10 µm bzw. von ca. 40 µm gehören. Die Figuren 3B und 3D zeigen entsprechende Schnitte entlang der Ausbreitungsrichtung (longitudinale Strahlprofile 53A und 53B).

Man erkennt in den transversalen Strahlprofilen 51A und 51B die Ausbildung eines kreisförmig geformten Hauptmaximums 55 und mehrere radial weiter außen liegende Nebenmaxima 57. Die Nebenmaxima 57 liegen z.B. unterhalb einer relevanten Schwellfluenz/-intensität eines zu bearbeitenden Materials, so dass dort keine Materialmodifikation bewirkt wird. Eine Modifikation der Materialstruktur erfolgt somit nur im Bereich des am weitesten innen liegenden Maximums 55. Die Modifikation erstreckt sich in einem Hohlzylinder, der im Querschnitt senkrecht zur Ausbreitungsrichtung einen Kreisring ausbildet.

In den longitudinalen Strahlprofilen 53A und 53B erkennt man ferner, wie die Hauptmaxima 55 sowie die Nebenmaxima 57 langgezogene zylindermantelförmige Fokuszonen 59 ausbilden, die keine Beugungseffekte entlang der Ausbreitungsrichtung zeigen.

Zur Verdeutlichung der Bearbeitung eines dünnen Werkstücks sind in Fig. 3B schematisch eine Eintrittsseite 61A für den Laserstrahl und Austrittsseite 61B für den Laserstrahl angedeutet, die zum Beispiel die Oberseite und die Unterseite einer dünnen zu durchbohrenden Glasplatte sind. Eine Dicke D der Glasplatte ist kleiner als eine angenommene Länge L der Fokuszone in Ausbreitungsrichtung Z.

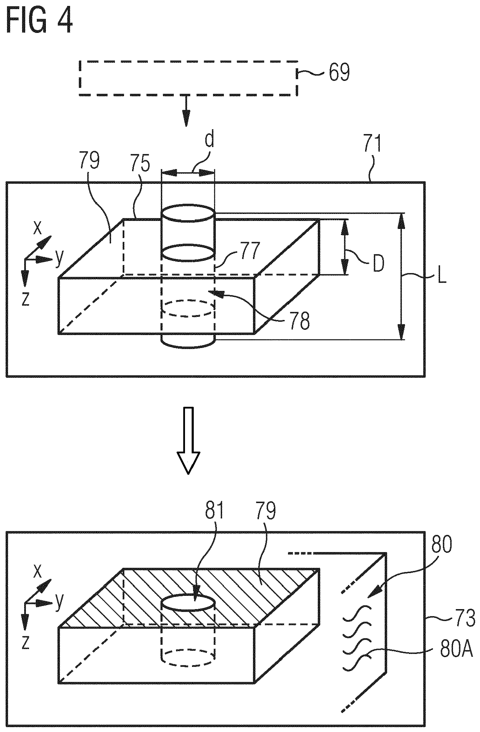

Bezugnehmend auf Fig. 4 kann allgemein eine dem diffraktiven optischen System zugeordnete modifizierte (reale oder virtuelle) zylindermantelartige Bessel-Strahl-Fokuszone in ein Werkstück 75 (z.B. mittels einer Teleskopanordnung) verkleinert abgebildet werden. Dazu kann in einem ersten Schritt 69 eine entsprechende zweidimensionale Phase transversal auf einen Laserstrahl aufgeprägt werden. Beispielhafte transparente Materialien umfassen Quarzglas, Borosilikatglas, Aluminosilikatglas (Alkalialuminosilikatglas), Boroaluminosilikatglas (Erdalkaliboroaluminosilikatglas) und Saphir.

Bei ausreichender Intensität wird eine Zylindermantelfläche 77 im Werkstück 75 modifiziert. Die Zylindermantelfläche 77 umschließt einen zylinderartig geformten Körper 78 und trennt diesen von einem Restmaterial 79. Dies entspricht einem Modifikationsschritt (Schritt 71 in Fig. 4), in dem die Materialstruktur selektiv in der Zylindermantelfläche 77 für eine verbesserte Ätzbarkeit verändert wird.

In einem sich anschließenden Ätzverfahrensschritt (Schritt 73 in Fig. 4) wird durch Auflösen des in Form der Zylindermantelfläche modifizierten Materials ein zylinderartig geformter Körper vom Restmaterial 79 losgelöst. Beispielhafte Parameter des Ätzvorgangs sind eine Ätzmedium wie 28 wt.-% KOH und eine Ätztemperatur von z.B. 80°C. Der Ätzverfahrensschritt erfolgt üblicherweise in einem Ätzbad 80 einer Ätze 80A und kann optional durch Ultraschall-Einstrahlung in das Ätzbad unterstützt werden.

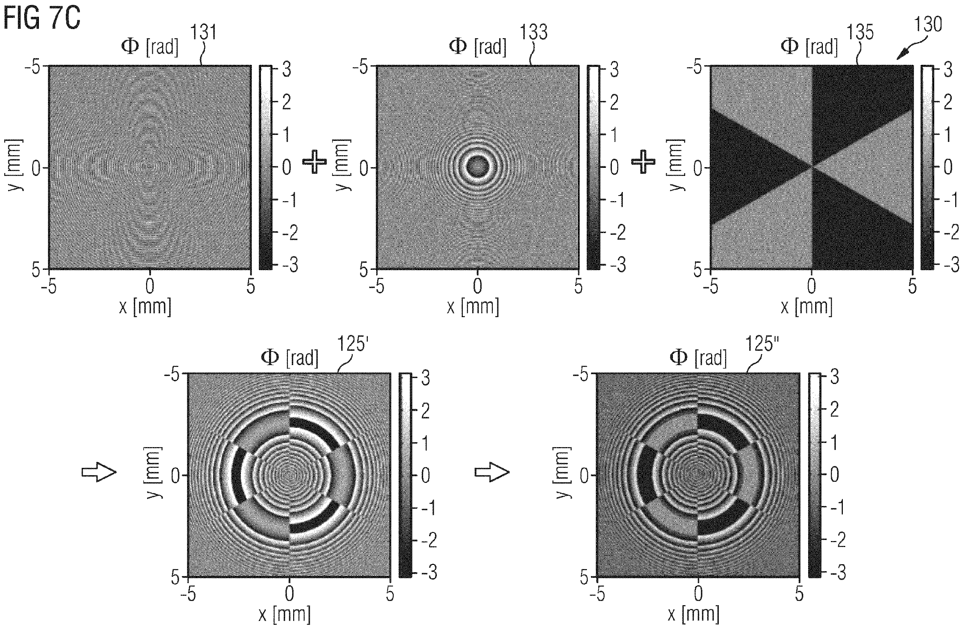

Wird der losgelöste Körper entnommen oder fällt er von sich aus dem Restmaterial 79 heraus, verbleibt ein Mikroloch 81 im Restmaterial 79, das einer zylindrischen Bohrung mit kleinstem Durchmesser entspricht. Bewirken die in Zusammenhang mit der Fig. 7C erläuterten Intensitätszonen keinen vollständig durch nass-chemisches Ätzen losgelösten Körper, kann dieser z.B. durch mechanisches Lösen der Verbindungslinien entnommen werden.

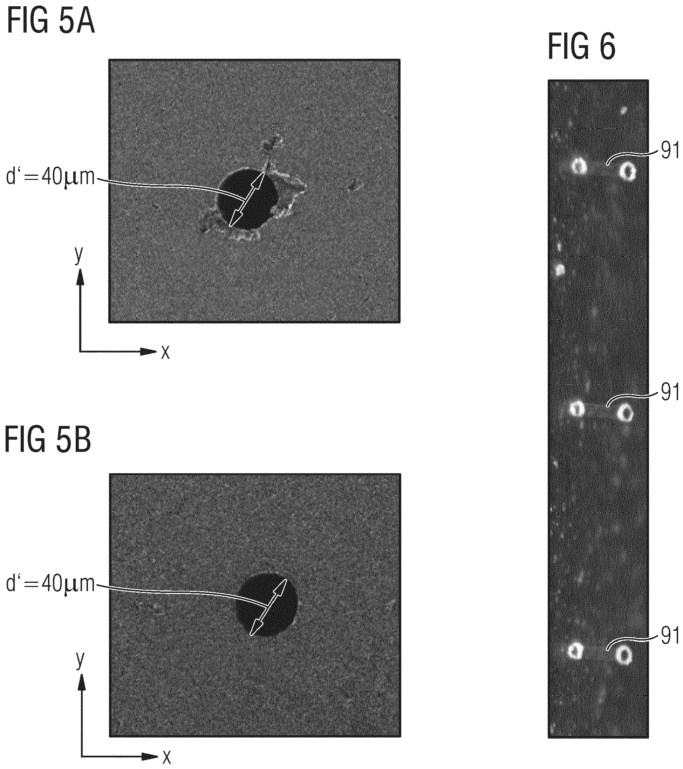

Die Figuren 5A und 5B zeigen Mikroskop-Aufnahmen von Löchern mit Lochdurchmessern d' von ca. 40 µm. Beispielhafte Parameter eines Mikrolochs/einer Mikrolochstruktur sind Lochdurchmesser im Bereich von 100 µm, insbesondere kleiner 100 µm wie z.B. 20 µm oder 25 µm, sowie ein Abstand zum nächst-benachbarten Mikroloch in der Größenordnung von z.B. einem Lochdurchmesser oder mehr, wie mindestens ein Zwei- bis Dreifachen des Lochdurchmessers (minimale Abstände von z.B. 10 µm bis 60 µm, beispielsweise 20 µm oder 40 µm).

Bezugnehmend auf die Figuren 5A und 5B kann bei den hierin vorgeschlagenen Konzepten eine Anzahl der Pulse pro Burst (Einzelpulse, Doppelpulse, 3, 4 oder mehr Pulse pro Burst) und/oder eine Anzahl an Pulsen pro Modifikation sowie deren zeitlicher Abstand variiert werden.

Fig. 6 zeigt eine Mikroskop-Aufnahme einer Anordnung von drei beabstandeten Modifikationen 91 in einem Werkstück, die durch einen einsetzenden Ätzprozess sichtbar gemacht wurden.

Zurückkommend auf eine Strahlformung mit dem Strahlformungselement 15 der Fig. 1 zeigen die Figuren 7A bis 7C schematische Darstellungen von Phasenmasken zur Verdeutlichung von flächig ausgebildeten Phasenverteilungen, wie sie in alternativen Strahlformungselementen vorliegen können. Wie in den Figuren 2A bis 2C sind in den Figuren 7A und 7C die Phasenschiebungswerte Φ(x, y) in [rad] von "-π" bis "+π" in Graustufenwerten dargestellt. Die sich ergebende Strahlformungselemente bewirkten in diesem Fall die Erzeugung einer azimutal in Abschnitte unterteilten Fokuszone, die somit abschnittsweise zylindermantelförmigen ausgebildet ist. Mit anderen Worten weist die Fokuszone eine ringförmige transversale Intensitätsverteilung auf, bei der nur in einigen Azimutalwinkelbereichen Zonen erhöhter Intensität vorliegen.

Fig. 7A zeigt schematisch eine Phasenverteilung 125 (Phasenschiebungswerte Φ(x, y)), wie sie beispielsweise mit dem fest eingeschriebenen diffraktiven optischen Strahlformungselements 15 (siehe Fig. 1) umgesetzt werden kann. Das Strahlformungselement 15 wird im Strahlengang des Laserstrahls 5 angeordnet, um eine Phasenverteilung (d.h. von Phasenschiebungswerten gemäß der Phasenverteilung 125) auf das transversale Strahlprofil des Laserstrahls 5 aufzuprägen. In die Phasenverteilung 125 der Fig. 7A ist eine Strahlmittenposition 123 eingezeichnet, auf die bevorzugt die Mitte des einfallenden Laserstrahls 5 justiert wird.

Die Phasenverteilung 125 kann durch Überlagern einer Phasenverteilung eines (inversen) Axicon und einer Phasenverteilung mit azimutalen Sprüngen in der Phase (alternierende Phasenschiebungswerte von "0" und "-π") erzeugt werden. (Siehe hierzu auch die in Zusammenhang mit Fig. 7C erläuterte Vorgehensweise, nur ohne Linsenphasenverteilung.) In Fig. 7A erkennt man sechs Phasensprünge in azimutaler Richtung. D.h., es wurden spezifische Phasenverläufe in sechs Azimutalwinkelbereichen 128 über ein Δcp von je 60° im Strahlformungselements 15 ausgebildet.

In Fig. 7A wird die flächige radiale Gitterstruktur durch aneinander angrenzende Flächenelemente 115A gebildet (siehe Beschreibung zur Fig. 2A). Das Größenverhältnis zwischen den beispielhaft rechteckig gezeigten Flächenelementen 115A und der Phasenabhängigkeit (Gitterperiode Tr in radialer Richtung) ist primär durch die technische Umsetzung des Strahlformungselements bedingt.

Jeweils gegenüberliegende Azimutalwinkelbereiche 128 entsprechen sich in ihren radialen Phasenverläufen. Dabei wird die radiale Richtung durch die Strahlmittenposition 123 im Zentrum der flächigen Gitterstruktur definiert. Die radialen Phasenverläufe bilden in radialer Richtung periodische Gitterfunktionen mit einem Sägezahngitterphasenverlauf aus, wobei in den Azimutalwinkelbereichen 128 Gitterfunktionen mit der gleiche Gitterperiode Tr in radialer Richtung vorliegen. Diese können sich jedoch in ihrer Radialgitterphase unterscheiden. So alterniert in Fig. 7A die Radialgitterphase benachbarter Azimutalwinkelbereiche 128 zwischen "0" und "-π", (projiziert auf die Strahlmittenposition 123). Die sechs Azimutalwinkelbereiche 128 (mit pi-Phasendifferenzen) sind in Fig. 7A erstrecken sich über gleiche große Winkelsegmente (Δϕ=60°). Entsprechend ergibt sich eine sechs-zählige Rotationssymmetrie der Phasenverteilung 125 um die Strahlmittenposition 123 (und damit auch der Intensitätsverteilung um die Strahlachse - siehe hierzu Fig. 7B).

Die Phasenverteilung 125 kann zur Erzeugung eines sogenannten Flügelstrahls mit sechs azimutal gleichmäßig verteilten primären Intensitätszonen genutzt werden. Diese radial am weitesten innen liegenden Intensitätszonen sind ringförmig angeordnet.

Bei Abbildung der Fokuszone in ein Werkstück erstrecken sich die Intensitätszonen entlang der Strahlrichtung Z und bilden so eine langgezogenen Fokuszone aus. Die Intensitätszonen definieren den Verlauf einer Zylindermantelfläche. Für die Erzeugung eines Mikro-Durchgangslochs sind die Parameter der Fokuszone derart gewählt, dass sich die langgezogenen Fokuszone (bevorzugt mit nahezu konstantem Durchmesser) zwischen den beiden Oberflächen des Werkstücks, beispielsweise eines Dünnglases oder eines Dünnstglases, erstreckt.

Fig. 7B zeigt in einem transversalen Schnitt (senkrecht zur Ausbreitungsrichtung der Laserstrahlung in der Fokuszone 7) eine beispielhafte ringförmige transversalen Intensitätsverteilung 129 (I(x, y)). Die Intensitätsverteilung 129 kann mit einem Strahlformungselement, das die flächige Phasenverteilung 125 zur Aufprägung auf einen Ultrakurzpuls-Laserstrahl aufweist, erzeugt werden kann, beispielsweise mit einem fest eingeschriebenen diffraktiven optischen Element oder einem einstellbaren räumlichen Lichtmodulator oder einer Kombination aus Axicon und Flügelstrahl-Phasen-Platte. Die Intensitätsverteilung 129 weist in sechs Azimutalwinkelbereichen (je 60°) in der X-Y-Ebene azimutal begrenzte Intensitätszonen 129A auf. Dadurch kann die Energie eines Laserpulses axial lokal erhöht werden. Beispielsweise können die Intensitäten in den Intensitätszonen 129A doppelt so hoch liegen, wie sie bei gleichen Laserparametern im Intensitätsring 29A in Fig. 2D vorliegen würde.

Im Unterschied zu einer "ringförmigen" transversalen Intensitätsverteilung mit einer kontinuierlich um die Ausbreitungsrichtung Z des Laserstrahls 5 verlaufende Intensitätszone (siehe z.B. Fig. 2D) weist die ringförmige transversale Intensitätsverteilung 129 mehrere (hier beispielhaft sechs) auf Azimutalwinkelbereiche um die Ausbreitungsrichtung Z des Laserstrahls 5 begrenzte Intensitätszonen 129A auf.

Auch derartige Fokuszonen lassen sich zum optischen Stanzen von Mikrolöchern nutzen. Wenn bei einem azimutal-segmentierten ringförmigen transversales Strahlprofil die Intensitätszonen sehr nahe aneinander heranreichen, kann sich im Material des Werkstücks 75 eine quasi-geschlossene Modifikation entlang einer Zylinderwandfläche ergeben. Diese kann im Nass-Ätzvorgang zu einem durchgängigen Materialbearbeitungsbereich entlang einer Zylindermantelfläche führen. Bei azimutal weiter entfernteren Intensitätszonen kann im Material des Werkstücks 75 eine Mehrzahl von Modifikationszonen erzeugt werden, die entlang der Ausbreitungsrichtung des Laserstrahls in der Fokuszone und auf einer Zylindermantelfläche um die Ausbreitungsrichtung des Laserstrahls verlaufen. Der Abstand der Modifikationszonen kann dabei derart sein, dass durch den Nass-Ätzvorgang die Modifikationszonen nicht mehr zu einem vollständig verbundenen Materialbearbeitungsbereich verbunden werden können. So können Verbindungslinien zwischen dem Inneren und dem Äußeren der durch die Intensitätszonen 129A definierten Zylindermantelfläche bestehen bleiben.

Analog zu Fig. 2C verdeutlicht Fig. 7C, wie sich ein Linsenanteil auf eine Phasenverteilung wie die Phasenverteilung 125 der Fig. 7A auswirkt. In der oberen Reihe der Fig. 7C ist links eine Phasenverteilung 131 eines inversen Axicons (radialsymmetrisches Sägezahngitter wie zur Erzeugung eines (inversen) Besselstrahlprofils) als Ausgangsphasenverlauf gezeigt. Beispielhaft können sich die gezeigten zweidimensionale Phasenverteilung über eine Größe von 5 mm × 5 mm erstrecken. Die Axicon-Phasenverteilung 131 wird mit einem Linsen-Phasenanteil kombiniert (multiplext), beispielsweise mit einer kollimierenden Phasenkomponente (Phasenverteilung 133, mittig in der oberen Reihe der Fig. 7C) einer Fernfeldoptik, die im optischen System 13 strahlabwärts des Strahlformungselements 15 angeordnet sein könnte.

Für die Ausbildung der azimutalen Intensitätsbereiche wird ein weiterer zweidimensionaler Phasenanteil aufgenommen, der in mehreren Azimutalwinkelbereichen konstante Phasenschiebungswerte aufweist (Flügelstrahl-Phasenverteilung 135, rechts in der oberen Reihe der Fig. 7C). Über die Anzahl der Azimutalwinkelbereiche kann die Anzahl der Intensitätszonen des erzeugten transversalen und azimutal modulierten Leistungsrings eingestellt werden. Wie in Fig. 7C angedeutet kann ein derartiges transversales und longitudinales Strahlprofil auch refraktiv mit einem Axicon (einer Axicon-Phasenverteilung) und einer Flügelstrahl-Phasen-Platte 130 (mit einer Flügelstrahl--Phasenverteilung 135) umgesetzt werden.

Aufgrund der zugrundeliegenden Bessel-Strahl-Charakteristik (radialer Sägezahnphasenverlauf) ändert sich der Durchmesser des transversalen und azimutal modulierten Leistungsrings entlang der Ausbreitungsrichtung (Z-Achse in den Figuren) im Wesentlichen nicht.

Die Kombination der drei Phasenverteilungen 131, 133, 135 ergibt eine Phasenverteilung 125' mit kontinuierlichen Phasenschiebungswerten (einer Vielzahl von Phasenschiebungswerten) zwischen "-π" und "+π".

Die Phasenverteilung 125' kann mit einem 4-Phasenmodel (z.B. mit den vier Phasenschiebungswerte "-π", "-π/2", "0" und "+π/2") auf den Flächenelementen 115A umgesetzt werden, so dass sich eine Phasenverteilung 125" ergibt.

Beispielsweise kann die Phasenverteilung 125" der Fig. 7C in einem diffraktiven optischen Element umgesetzt werden. Alternativ kann die Phasenverteilung 125 oder die Phasenverteilung 125" durch eine Kombination eines Axicon zum Aufprägen einer (inversen) Axicon-Phasenverteilung und einer Flügelstrahl-Phasen-Platte 130 zum Aufprägen einer Flügelstrahl-Phasenverteilung (und optional erweitert um eine Kollimationsphasenverteilung) erreicht werden. Dabei wird unter einer Flügelstrahl-Phasen-Platte 130 eine azimutal in Winkelsegmente untergliederte Phasenmaske verstanden, bei der in Winkelsegmenten segmentspezifische konstante Phasenschiebungsbeiträge vorliegen.

Die in den Figuren 3A, 3C und 7B gezeigten Intensitätsverteilungen weisen in der Fokuszone eine Rotationssymmetrie hinsichtlich der Strahlachse auf. Die Intensitätsverteilungen können rotationssymmetrische Strahlquerschnitte (Rotationssymmetrie im engeren Sinne oder mit einer vorbestimmten Zähligkeit) aufweisen. Die Rotationssymmetrie führt zu einer Modifikation, die durchgehend entlang einer Mantelfläche eines Kreiszylinders ausgebildet sein kann, oder zu Modifikationen, die auf einer Mantelfläche eines Kreiszylinders angeordnet sind. D.h., die Modifikationszone(n) bilden optional im Querschnitt senkrecht zur Ausbreitungsrichtung Z einen Kreisring aus.

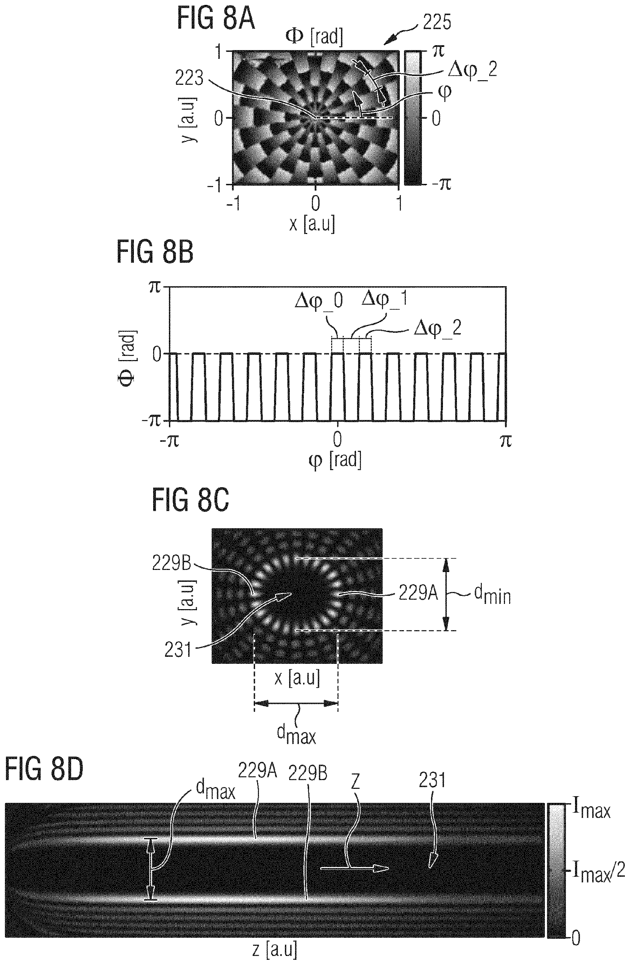

Die Fig. 8A bis 8D verdeutlichen die Erweiterung auf eine Fokuszone mit einer Querschnittsfläche in Form eines elliptischen Rings. Dabei wird beispielhaft der Fall gezeigt, bei dem Intensitätsmaxima in Azimutalabschnitten auf einer Mantelfläche eines elliptischen Zylinders in Ausbreitungsrichtung Z verlaufen.

Fig. 8A zeigt schematisch eine Phasenverteilung 225 mit flächig verteilten Phasenschiebungswerten Φ(x, y). Die Phasenverteilung 225 kann beispielsweise mit einem fest eingeschriebenen diffraktiven optischen Strahlformungselement (Strahlformungselement 15 in Fig. 1) umgesetzt werden. Das Strahlformungselement wird im Strahlengang des Laserstrahls angeordnet, um seine Phasenverteilung (d.h. die Phasenschiebungswerte gemäß der Phasenverteilung 225) auf das transversale Strahlprofil des Laserstrahls aufzuprägen. In die Phasenverteilung 225 der Fig. 8A ist eine Strahlmittenposition 223 eingezeichnet, auf die bevorzugt die Mitte eines einfallenden Laserstrahls justiert wird. Ferner ist in Fig. 8A der Azimutalwinkel ϕ eingezeichnet.

Die Phasenverteilung 225 kann wie die Phasenverteilung 125 der Fig. 7A durch Überlagern einer Phasenverteilung eines (inversen) Axicon und einer Phasenverteilung mit azimutalen Sprüngen in der Phase (alternierende Phasenschiebungswerte von "0" und "-π") erzeugt werden.

Fig. 8B zeigt einen azimutalen Phasenverlauf Φ(ϕ) für die Phasenverteilung 225 an einer radialen Position, an der die Phasensprünge zwischen "-π" und "0" erfolgen.

In den Figuren 8A und 8B erkennt man 24 Phasensprünge in azimutaler Richtung. Beispielhaft sind in Fig. 8B drei Azimutalwinkelbereiche Δϕ_0, Δϕ_1, Δϕ_2 gekennzeichnet. Man erkennt, dass die Azimutalwinkelbereiche der Phasenverteilung 225 unterschiedlich Größen aufweisen, wobei eine Punktsymmetrie zur Strahlmittenposition 223 gegeben ist.

In Fig. 8A erkennt man ferner, dass die Gitterperiode in radialer Richtung in allen azimutalen Winkelbereichen identisch ist und dass die Phase Φ kontinuierlich (linear) von "+π" bis "-π" in radialer Richtung variiert und entsprechend einen Sägezahngitterphasenverlauf ausbildet.

Wie in Fig. 8C gezeigt, kann die Phasenverteilung 225 zur Erzeugung eines Flügelstrahlähnlichen Strahls mit 24 Intensitätszonen 229A, 229B genutzt werden. Die 24 Intensitätszonen 229A, 229B sind im X-Y-Querschnitt zur Ausbreitung Z in einer Ellipsenform verteilt angeordnet. In Fig. 8C sind ein maximaler Durchmesser dmax in X-Richtung und ein minimaler Durchmesser dmin in Y-Richtung der elliptischen Form eingezeichnet. Der minimale Durchmesser dmin und der maximale Durchmesser dmax bleiben entlang der Ausbreitungsrichtung Z des Laserstrahls im Wesentlichen unverändert. In diesem Fall einer elliptischen transversalen Grundform ist der maximale Durchmesser dmax bevorzugt kleiner gleich 500 µm.

Dazugehörig zeigt Fig. 8D Intensitätsverläufe in einem Z-X-Schnitt durch die Fokuszone, und zwar durch die Intensitätszonen 229A, 229B der Fig. 8C. Die Intensitätsverläufe erstrecken sich in Z-Richtung langgezogen, beispielsweise mit einem hohen Aspektverhältnis von z.B. mindestens 10:1 und mehr, beispielsweise 20:1 und mehr oder 30:1 und mehr, z.B. auch größer 1000:1.

Die 24 Intensitätszonen 229A, 229B grenzen ein Volumen 231 in Form eines elliptischen Zylinders im Inneren der Fokuszone ab, das sich entlang der Strahlausbreitungsrichtung Z erstreckt. Wird ein derartig geformter hochintensiver Laserstrahl in ein Werkstück eingestrahlt, kann eine Modifikation des Materials des Werkstücks erzeugt werden, die sich von einer Seite des Werkstücks zu anderen erstreckt.

Die Modifikation kann beispielsweise eine Mehrzahl von Modifikationszonen umfassen, die auf die Intensitätszonen 229A, 229B zurückgehen. Im Werkstück grenzt die Modifikation einen zylinderförmigen Körper ab, der die Form eines elliptischen Zylinders aufweist. Wird das Werkstück mit einer derartigen Modifikation in ein nass-chemisches Ätzbad eingebracht, kann der Körper strukturell vom Restmaterial getrennt werden. Wird der losgelöste Körper aus dem Werkstück entfernt, ergibt sich ein Durchgangsloch durch das Werkstück mit einem elliptischen Querschnitt.

Es wird angemerkt, dass auch Phasenmasken erzeugt werden können, die zu einem kontinuierlich ausgebildeten Intensitätsmaximum in Form einer elliptischen Zylindermantelfläche führen, beispielsweise unter Verwendung einer entsprechend angepassten Vortex-Phasenverteilung (siehe Figur 2C).

Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zum selektiven laserinduzierten Ätzen eines Mikrolochs (81) in ein Werkstück (75), **gekennzeichnet durch** die Schritte:
Erzeugen (Schritt 71) einer Modifikation (91) im Werkstück (75), die sich von einer Eintrittsseite (61A) bis zu einer Austrittsseite (61B) des Werkstücks erstreckt, wobei die Modifikation (91) mit einem Laserpuls erzeugt wird, der eine ringförmige transversale Intensitätsverteilung (51A, 51B, 151) aufweist, die sich in einer Ausbreitungsrichtung (Z) des Laserstrahls (5) mindestens über eine Länge (L) erstreckt, die zu einer Ausbildung der Modifikation (91) von der Eintrittsseite (61A) bis zur Austrittsseite (61B) des Werkstücks führt, wobei die Modifikation (91) einen zylinderförmigen Körper (77) von einem die Modifikation (91) umgebenden Restmaterial (79) abgrenzt, und
Einbringen (Schritt 73) des Werkstücks (75) mit der Modifikation (91) in ein nass-chemisches Ätzbad (80) zum strukturellen Trennen des zylinderförmigen Körpers (77) vom Restmaterial (79).

2. Verfahren nach Anspruch 1, wobei die Modifikation (91) sich in einem Hohlzylinder, der im Querschnitt senkrecht zur Ausbreitungsrichtung (Z) einen Kreisring oder einen elliptischen Ring ausbildet, erstreckt, und der zylinderförmige Körper (77) die Form eines Kreiszylinders oder eines elliptischen Zylinders aufweist.

3. Verfahren nach Anspruch 1 oder 2, wobei die ringförmige transversale Intensitätsverteilung (51A, 51B, 151) eine kontinuierlich um die Ausbreitungsrichtung (Z) des Laserstrahls (5) verlaufende Intensitätszone (29A) aufweist, die als Modifikation (91) eine zylindermantelförmige Modifikationszone im Material des Werkstücks (75) erzeugt, und
wobei die zylindermantelförmige Modifikationszone im Querschnitt senkrecht zur Ausbreitungsrichtung (Z) optional einen Kreisring oder einen elliptischen Ring ausbildet.

4. Verfahren nach Anspruch 1 oder 2, wobei die ringförmige transversale Intensitätsverteilung (51A, 51B, 151) mehrere, auf Azimutalwinkelbereiche (128) um die Ausbreitungsrichtung (Z) des Laserstrahls (5) begrenzte Intensitätszonen (129A) aufweist, die als Modifikation (91) eine Mehrzahl von in der Ausbreitungsrichtung (Z) des Laserstrahls (5) und auf einer Zylindermantelfläche um die Ausbreitungsrichtung (Z) des Laserstrahls (5) verlaufenden Modifikationszonen im Material des Werkstücks (75) erzeugen, und
wobei die Mehrzahl von Modifikationszonen im Querschnitt senkrecht zur Ausbreitungsrichtung (Z) optional einen Kreisring oder einen elliptischen Ring ausbildet.

5. Verfahren nach einem der vorhergehenden Ansprüche, wobei die Modifikation (91) eine strukturelle Veränderung des Materials des Werkstücks (75) darstellt, die das Material von einem nicht-ätzbaren Zustand des nicht-modifizierten Materials in einen ätzbaren Zustand des modifizierten Materials überführt, und, wobei die Modifikation (91) insbesondere durch eine Zunahme der nass-chemischen Ätzbarkeit im Vergleich zum nicht-modifizierten Material gekennzeichnet ist.

6. Verfahren nach einem der vorhergehenden Ansprüche, wobei zum Erzeugen der zylindermantelförmigen Modifikation (91) ein Laserpuls oder eine Mehrzahl von Laserpulsen mit identischen transversalen Intensitätsverteilungen (51A, 51B, 151) und longitudinalen Intensitätsverteilungen (53A, 53B) eingestrahlt wird, die insbesondere als ein Burst von Laserpulsen mit zeitlichen Abständen im Bereich von einigen Nanosekunden oder als Sequenz von zeitlich beabstandeten Laserpulsen oder Bursts von Laserpulsen mit zeitlichen Abständen im Bereich von bis zu einigen 100 Mikrosekunden auf das Werkstück (75) auftreffen und wobei die Mehrzahl von Laserpulsen insbesondere am gleichen Ort auftrifft, um einen Überlapp der Wechselwirkungsbereiche zu gewährleisten.

7. Verfahren nach einem der vorhergehenden Ansprüche, ferner mit
Aufprägen (Schritt 69) einer transversalen Phasenverteilung (25) auf den Laserstrahl (5), die nach Fokussieren des Laserstrahls (5) zu der ringförmigen transversalen Intensitätsverteilung (51A, 51B, 151) führt, wobei die ringförmige transversale Intensitätsverteilung (51A, 51B, 151) insbesondere in einer Kreisringform einen Kreisdurchmesser (d) aufweist, der entlang einer Ausbreitungsrichtung (Z) des Laserstrahls (5) im Werkstück (75) im Wesentlichen unverändert bleibt oder in einer elliptischen Ringform einen minimalen Durchmesser (dmin) und einen maximalen Durchmesser (dmax) aufweist, die entlang einer Ausbreitungsrichtung (Z) des Laserstrahls (5) im Werkstück (75) im Wesentlichen unverändert bleiben.

8. Verfahren nach Anspruch 7, wobei die Phasenverteilung (25) mit einem diffraktiven optischen Strahlformungselement (15) nach einem der Ansprüche 11 bis 14 oder durch eine Kombination eines Axicon zum Aufprägen einer Axicon-Phasenverteilung (31) und einer Phasenschraubenplatte (29) zum Aufprägen einer Vortex-Phasenverteilung oder durch eine Kombination eines Axicon zum Aufprägen einer Axicon-Phasenverteilung (131) und einer Flügelstrahl-Phasen-Platte (130) zum Aufprägen einer Flügelstrahl-Phasenverteilung (135) geformt wird.

9. Verfahren nach einem der vorhergehenden Ansprüche, wobei
das Werkstück (75) ein Dünnglas und insbesondere ein Dünnstglas ist und/oder
der Laserpuls ein Ultrakurzpuls ist, insbesondere mit Pulslängen von einigen Pikosekunden und kürzer, insbesondere im Bereich von einigen bis zu einigen hundert Femtosekunden, und/oder
die ringförmige transversale Intensitätsverteilung (51A, 51B, 151) und damit das Mikroloch im Fall einer kreisförmigen transversalen Grundform einen Kreisdurchmesser (d, d') oder im Fall einer elliptischen transversalen Grundform einen maximalen Durchmesser (dmax) kleiner gleich 500 µm aufweisen und/oder
das Werkstück (75) eine Dicke (D) in Ausbreitungsrichtung (9) des einfallenden Laserstrahls (5) kleiner gleich 2 mm, insbesondere im Bereich von 5 µm bis 2 mm oder im Bereich von 10 µm bis 200 µm, aufweist und/oder
das Material des Werkstücks (75) für den Laserstrahl (5) weitgehend transparent ist.

10. Verfahren nach einem der vorhergehenden Ansprüche, ferner mit
Bewirken einer Relativbewegung zwischen dem Werkstück (75) und dem Laserstrahl (5) zum Erzeugen einer Anordnung von Mikrolöchern.

11. Laserbearbeitungsanlage (1) für die Bearbeitung eines Werkstücks (75) mit einem Laserstrahl (5) durch Modifizieren eines Materials (3) des Werkstücks (75) in einer Fokuszone (7) des Laserstrahls (5), die in einer Ausbreitungsrichtung (9) des Laserstrahls langgezogen ausgebildet ist, mit:
einer Laserstrahlquelle (11), die einen Laserstrahl (5) ausgibt, einem Bearbeitungskopf (17) mit einer Fokussierlinse (17A); einem nass-chemischen Ätzbad (80); **gekennzeichnet durch** ein optisches System (13), aufweisend
- ein diffraktives optisches Strahlformungselement (15) zum Aufprägen einer Phasenverteilung auf ein transversales Strahlprofil eines Laserstrahls (5) mit aneinander angrenzenden Flächenelementen (15A), die eine flächige Gitterstruktur aufbauen, bei der jedem Flächenelement (15A) ein Phasenschiebungswert zugeordnet ist und die Phasenschiebungswerte eine zweidimensionale Phasenverteilung (25) definieren, wobei die zweidimensionale Phasenverteilung (25) eine Strahlmittenposition (23, 123) aufweist, die eine radiale Richtung in der flächigen Gitterstruktur definiert, die Phasenschiebungswerte jeweils bezüglich der Strahlmittenposition (23) in radialer Richtung periodische Gitterfunktionen ausbilden, die eine gleiche Gitterperiode (Tr) aufweisen, und zu jeder der periodischen Gitterfunktionen eine Radialgitterphase bezüglich der Strahlmittenposition (23, 123) zugeordnet ist, die durch einen azimutal umlaufend kontinuierlich zunehmenden oder in Azimutalwinkelabschnitten (128) variierenden, insbesondere zunehmenden, abnehmenden oder zwischen einem oder mehreren Werten alternierenden, Phasenbeitrag gebildet wird und
- wobei das diffraktive optische Strahlformungselement (15) im Strahlengang des Laserstrahls (5) angeordnet ist, um dem Laserstrahl (5) eine zweidimensionale Phasenverteilung aufzuprägen, und die zweidimensionale Phasenverteilung dazu eingerichtet, eine Ausbildung der langgezogenen Fokuszone (7) im Material (3) durch Fokussieren des Laserstrahls (5) mit der Fokussierlinse (17A) zu bewirken, wobei zur Erzeugung einer Modifikation (91), insbesondere mit einem Laserpuls oder einer Mehrzahl von Laserpulsen, die Fokuszone (7) eine ringförmige, insbesondere kreisringförmige oder elliptisch-ringförmige, transversale Intensitätsverteilung (51A, 51B) aufweist, die sich in einer Ausbreitungsrichtung (Z) des Laserstrahls (5) mindestens über eine Länge (L) erstreckt, die zu einer Ausbildung der Modifikation (91) von einer Eintrittsseite (61A) des Materials (3) bis zu einer Austrittsseite (61B) des Materials (3) führt, wobei die Modifikation (91) einen zylinderförmigen, insbesondere kreiszylinderförmigen oder elliptisch-ringzylinderförmigen, Körper (77) von einem die Modifikation (91) umgebenden Restmaterial (79) abgrenzt, damit der Körper (77) im nass-chemischen Ätzbad (80) vom Restmaterial (79) getrennt werden kann.

12. Laserbearbeitungsanlage (1) nach Anspruch 11, wobei die periodischen Gitterfunktionen jeweils einen Anteil eines Sägezahngitterphasenverlaufs aufweisen, wobei eine Steigung eines Anstiegsbereichs in jedem der Sägezahngitterphasenverläufe einem vorbestimmten Axicon-Winkel entspricht, der dem diffraktiven optischen Strahlformungselement (15) zugeordnet ist.

13. Laserbearbeitungsanlage (1) nach Anspruch 11 oder 12, wobei die periodischen Gitterfunktionen jeweils einen Anteil einer zweidimensionalen Kollimationsphasenverteilung, insbesondere einer zweidimensionalen fokussierenden Phasenverteilung, aufweist, die bezüglich der Strahlmittenposition (23) radialsymmetrisch ausgebildet ist.

14. Laserbearbeitungsanlage (1) für die Bearbeitung eines Werkstücks (75) mit einem Laserstrahl (5) durch Modifizieren eines Materials (3) des Werkstücks (75) in einer Fokuszone (7) des Laserstrahls (5), die in einer Ausbreitungsrichtung (9) des Laserstrahls (5) langgezogen ausgebildet ist, mit:
einer Laserstrahlquelle (11), die einen Laserstrahl (5) ausgibt, einem Bearbeitungskopf (17) mit einer Fokussierlinse (17A); einem nass-chemischen Ätzbad (80); **gekennzeichnet durch** ein optisches System (13), das
- eine Kombination eines Axicon zum Aufprägen einer Axicon-Phasenverteilung (27) und einer Phasenschraubenplatte (30) zum Aufprägen einer Vortex-Phasenverteilung oder eine Kombination eines Axicon zum Aufprägen einer Axicon-Phasenverteilung (27) und einer Flügelstrahl-Phasen-Platte (130) zum Aufprägen einer Flügelstrahl-Phasenverteilung (135) aufweist,
wobei das diffraktive optische Strahlformungselement (15) im Strahlengang des Laserstrahls (5) angeordnet ist, um dem Laserstrahl (5) eine zweidimensionale Phasenverteilung aufzuprägen, und die zweidimensionale Phasenverteilung dazu eingerichtet, eine Ausbildung der langgezogenen Fokuszone (7) im Material (3) durch Fokussieren des Laserstrahls (5) mit der Fokussierlinse (17A) zu bewirken, wobei zur Erzeugung einer Modifikation (91), insbesondere mit einem Laserpuls oder einer Mehrzahl von Laserpulsen, die Fokuszone (7) eine ringförmige, insbesondere kreisringförmige oder elliptisch-ringförmige, transversale Intensitätsverteilung (51A, 51B) aufweist, die sich in einer Ausbreitungsrichtung (Z) des Laserstrahls (5) mindestens über eine Länge (L) erstreckt, die zu einer Ausbildung der Modifikation (91) von einer Eintrittsseite (61A) des Materials (3) bis zu einer Austrittsseite (61B) des Materials (3) führt, wobei die Modifikation (91) einen zylinderförmigen, insbesondere kreiszylinderförmigen oder elliptisch-ringzylinderförmigen, Körper (77) von einem die Modifikation (91) umgebenden Restmaterial (79) abgrenzt, damit der Körper (77) im nass-chemischen Ätzbad (80) vom Restmaterial (79) getrennt werden kann.

15. Laserbearbeitungsanlage (1) nach einem der Ansprüche 11 bis 14, wobei die zweidimensionale Phasenverteilung dazu eingerichtet ist, dass die ringförmige transversale Intensitätsverteilung (51A, 51B, 151) eine kontinuierlich um die Ausbreitungsrichtung (Z) des Laserstrahls (5) verlaufende Intensitätszone (29A) oder mehrere, auf Azimutalwinkelbereiche (128) um die Ausbreitungsrichtung (Z) des Laserstrahls (5) begrenzte Intensitätszonen (129A229A, 229B) aufweist, und
wobei die Modifikation (91) im Querschnitt senkrecht zur Ausbreitungsrichtung (Z) des Laserstrahls (5) optional einen durchgehenden oder einen unterbrochenen Kreisring oder einen durchgehenden oder einen unterbrochenen elliptischen Ring ausbildet.

## Claims

1. A method for selective laser-induced etching of a microhole (81) into a workpiece (75), the method **characterized by** the steps of:
creating (step 71) a modification (91) in the workpiece (75) that extends from an entrance side (61A) to an exit side (61B) of the workpiece, the modification (91) being created by a laser pulse that has an annular transverse intensity distribution (51A, 51B, 151) extending in a propagation direction (Z) of the laser beam (5) at least over a length (L) which results in the modification (91) being formed from the entrance side (61A) to the exit side (61B) of the workpiece, the modification (91) delimiting, by a remaining material (79) surrounding the modification (91), a cylindrical body (77), and
introducing (step 73) the workpiece (75) with the modification (91) into a wet-chemical etching bath (80) for structurally separating the cylindrical body (77) from the remaining material (79).

2. The method according to claim 1, wherein the modification (91) extends in a hollow cylinder, the cross-section of which perpendicular to the propagation direction (Z) forms a circular ring or an elliptical ring, and the cylindrical body (77) has the form of a circular cylinder or an elliptical cylinder.

3. The method according to claim 1 or 2, wherein the annular transverse intensity distribution (51A, 51B, 151) has an intensity zone (29A) which runs continuously around the propagation direction (Z) of the laser beam (5) and creates a modification zone in the material of the workpiece (75) in the form of a lateral surface of a cylinder as a modification (91) and
wherein the modification zone in the form of a lateral surface of a cylinder optionally forms a circular ring or an elliptical ring in a cross-section perpendicular to the propagation direction (Z).

4. The method according to claim 1 or 2, wherein the annular transverse intensity distribution (51A, 51B, 151) has a plurality of intensity zones (129A) which are restricted to azimuth angle regions (128) around the propagation direction (Z) of the laser beam (5) and which create a plurality of modification zones in the material of the workpiece (75) running in the propagation direction (Z) of the laser beam (5) and along a cylinder lateral surface around the propagation direction (Z) of the laser beam (5) as modification (91), and
wherein the plurality of modification zones forms a circular ring or an elliptical ring in a cross-section perpendicular to the propagation direction (Z).

5. The method according to one of the preceding claims, wherein the modification (91) represents a structural change of the material of the workpiece (75) that converts the material from a non-etchable state of the non-modified material to an etchable state of the modified material and wherein the modification (91) is **characterized in** particular by an increase in wet-chemical etchability compared to the non-modified material.

6. The method according to one of the preceding claims, wherein a laser pulse or a plurality of laser pulses having identical transverse intensity distributions (51A, 51B, 151) and longitudinal intensity distributions (53A, 53B) are radiated in to create the modification (91) in the form of a lateral surface of a cylinder, the laser pulse(s) impinge on the workpiece (75), in particular as a burst of laser pulses at time intervals in the range of a few nanoseconds or as a sequence of temporally offset laser pulses or bursts of laser pulses at time intervals in the range of up to a few 100 microseconds, and wherein the plurality of laser pulses impinges at the same location in order to ensure an overlap of regions of interaction.

7. The method according to one of the preceding claims, further comprising
imposing (step 69) a transverse phase distribution (25) on the laser beam (5), resulting in the annular transverse intensity distribution (51A, 51B, 151) after the laser beam (5) has been focused, wherein the annular transverse intensity distribution (51A, 51B, 151), in particular in the form of a circular ring, has a circle diameter (d) that remains substantially unchanged along a propagation direction (Z) of the laser beam (5) in the workpiece (75), or, in the form of an elliptical ring, has a minimum diameter (dmin) and a maximum diameter (dmax) which remain substantially unchanged along a propagation direction (Z) of the laser beam (5) in the workpiece (75).

8. The method according to claim 7, wherein the phase distribution (25) is formed by a diffractive optical beam-shaping element (15) according to one of claims 11 to 14 or by a combination of an axicon for imposing an axicon phase distribution (31) and a spiral phase plate (29) for imposing a vortex phase distribution or by a combination of an axicon for imposing an axicon phase distribution (131) and a lobe-beam phase plate (130) for imposing a lobe-beam phase distribution (135).

9. The method according to one of the preceding claims, wherein
the workpiece (75) is a thin glass and in particular an ultrathin glass, and/or
the laser pulse is an ultrashort pulse having pulse lengths of a few picoseconds and shorter, in particular in the range of a few to a few hundred femtoseconds, and/or
the annular transverse intensity distribution (51A, 51B, 151), and thereby the microhole in the case of a circular transverse base form, has a circle diameter (d, d'), or in the case of an elliptical transverse base form has a maximum diameter (dmax) that is less than or equal to 500 µm, and/or
the workpiece (75) has a thickness (D) in the propagation direction (9) of the incident laser beam (5) of less than or equal to 2 mm, in particular in the range of 5 µm to 2 mm or in the range of 10 µm to 200 µm, and/or
the material of the workpiece (75) is largely transparent to the laser beam (5).

10. The method according to one of the preceding claims, further comprising
effecting a relative movement between the workpiece (75) and the laser beam (5) in order to create an arrangement of microholes.

11. A laser-machining apparatus (1) for machining a workpiece (75) using a laser beam (5) by modifying a material (3) of the workpiece (75) in a focus zone (7) of the laser beam (5), the focus zone being elongated in a propagation direction (9) of the laser beam, the laser-machining apparatus comprising:
a laser beam source (11) which emits a laser beam (5), a machining head (17) having a focusing lens (17A); a wet-chemical etching bath (80); **characterized by** an optical system (13) which comprises
- a diffractive optical beam-shaping element (15) for imposing a phase distribution on a transverse beam profile of a laser beam (5), the diffractive optical beam-shaping element comprising surface elements (15A) that adjoin one another and form an areal grating structure, each surface element (15A) of said structure being assigned a phase shift value, and the phase shift values defining a two-dimensional phase distribution (25), wherein the two-dimensional phase distribution (25) has a beam center position (23, 123) that defines a radial direction in the areal grating structure, each of the phase shift values forming periodic grating functions in the radial direction with respect to a beam center position (23), the functions having an identical grating period (Tr), and each of the periodic grating functions being assigned a radial grating phase with respect to the beam center position (23, 123), the radial grating phases being formed by a phase contribution that increases continuously in an azimuthal circumferential manner or that varies in azimuth angle sections (128), in particular a phase contribution that increases, decreases or alternates between one or more values and
- wherein the diffractive optical beam-shaping element (15) is arranged in the beam path of the laser beam (5) in order to impose a two-dimensional phase distribution on the laser beam (5), and the two-dimensional phase distribution is configured to effect a formation of the elongated focus zone (7) in the material (3) by focusing the laser beam (5) using the focusing lens (17A), wherein in order to create a modification (91), in particular using a laser pulse or a plurality of laser pulses, the focus zone (7) has an annular transverse intensity distribution (51A, 51B), in particular in the form of a circular ring or elliptical ring, that extends in a propagation direction (Z) of the laser beam (5) at least over a length (L) which results in the modification (91) being formed from an entrance side (61A) of the material (3) to an exit side (61B) of the material (3), the modification (91) delimiting, by a remaining material (79) surrounding the modification (91), a cylindrical, in particular circular-cylindrical or elliptical ring-cylindrical, body (77),
thereby allowing the body (77) to be separated from the remaining material (79) in the wet-chemical etching bath (80).

12. The laser-machining apparatus (1) according to claim 11, wherein each of the periodic grating functions comprises a portion of a sawtooth grating phase profile, wherein a gradient of a region of increase in each of the sawtooth grating phase profiles corresponds to a predetermined axicon angle assigned to the diffractive optical beam-shaping element (15).

13. The laser-machining apparatus (1) according to claim 11 or 12, wherein each of the periodic grating functions comprises a portion of a two-dimensional collimation phase distribution, in particular a two-dimensional focusing phase distribution, which is formed radially symmetrical with respect to the beam center position (23).

14. A laser-machining apparatus (1) for machining a workpiece (75) using a laser beam (5) by modifying a material (3) of the workpiece (75) in a focus zone (7) of the laser beam (5) the focus zone being elongated in a propagation direction (9) of the laser beam (5), comprising:
a laser beam source (11) that emits a laser beam (5),
a machining head (17) having a focusing lens (17A); a wet-chemical etching bath (80);
**characterized by** an optical system (13) comprising
- a combination of an axicon for imposing an axicon phase distribution (27) and a spiral phase plate (30) for imposing a vortex phase distribution or a combination of an axicon for imposing an axicon phase distribution (27) and a lobe-beam phase plate (130) for imposing a lobe-beam phase distribution (135),
wherein the diffractive optical beam-shaping element (15) is arranged in the beam path of the laser beam (5) in order to impose a two-dimensional phase distribution on the laser beam (5), and the two-dimensional phase distribution is configured to effect a formation of the elongated focus zone (7) in the material (3) by focusing the laser beam (5) using the focusing lens (17A), wherein in order to create a modification (91), in particular using a laser pulse or a plurality of laser pulses, the focus zone (7) has an annular transverse intensity distribution (51A, 51B), in particular in the form of a circular ring or elliptical ring, that extends in a propagation direction (Z) of the laser beam (5) at least over a length (L) which results in the modification (91) being formed from an entrance side (61A) of the material (3) to an exit side (61B) of the material (3), the modification (91) delimiting, by a remaining material (79) surrounding the modification (91), a cylindrical, in particular circular-cylindrical or elliptical-ring-cylindrical, body (77), thereby allowing the body (77) to be separated from the remaining material (79) in the wet-chemical etching bath (80).

15. The laser-machining apparatus (1) according to one of claims 11 to 14, wherein the two-dimensional phase distribution is configured such that the annular transverse intensity distribution (51A, 51B, 151) has an intensity zone (29A) running continuously around the propagation direction (Z) of the laser beam (5) or has a plurality of intensity zones (129A, 229A, 229B) which are restricted to azimuth angle regions (128) around the propagation direction (Z) of the laser beam (5), and
wherein in cross-section perpendicular to the propagation direction (Z) of the laser beam (5), the modification (91) forms a continuous or interrupted circular ring or a continuous or interrupted elliptical ring.

## Revendications

1. Procédé de gravure sélective induite par laser d'un microtrou (81) dans une pièce à usiner (75), **caractérisé par** les étapes de :
génération (étape 71) d'une modification (91) dans la pièce à usiner (75) s'étendant d'un côté d'entrée (61A) à un côté de sortie (61B) de la pièce à usiner, où la modification (91) est générée avec une impulsion laser présentant une répartition transversale annulaire de l'intensité (51A, 51B, 151), qui s'étend dans une direction de propagation (Z) du faisceau laser (5) au moins sur une longueur (L) qui conduit à une formation de la modification (91) depuis le côté d'entrée (61A) jusqu'au côté de sortie (61B) de la pièce à usiner, où la modification (91) délimite un corps de forme cylindrique (77) d'un matériau résiduel (79) entourant la modification (91), et
l'introduction (étape 73) de la pièce à usiner (75) avec la modification (91) dans un bain de gravure chimique humide (80) afin de séparer structurellement le corps de forme cylindrique (77) du matériau résiduel (79).

2. Procédé selon la revendication 1, où la modification (91) s'étend dans un cylindre creux formant un anneau circulaire ou un anneau elliptique en section transversale perpendiculaire à la direction de propagation (Z), et où le corps cylindrique (77) se présente sous la forme d'un cylindre circulaire ou d'un cylindre elliptique.

3. Procédé selon la revendication 1 ou 2, où la répartition transversale annulaire de l'intensité (51A, 51B, 151) présente une zone d'intensité (29A) s'étendant de manière continue autour de la direction de propagation (Z) du faisceau laser (5), qui produit comme modification (91) une zone de modification en forme d'enveloppe cylindrique dans le matériau de la pièce à usiner (75), et où la zone de modification en forme d'enveloppe cylindrique forme en option un anneau circulaire ou un anneau elliptique dans la section transversale perpendiculaire à la direction de propagation (Z).

4. Procédé selon la revendication 1 ou 2, où la répartition transversale annulaire de l'intensité (51A, 51B, 151) présente plusieurs zones d'intensité (129A) limitées à des plages angulaires azimutales (128) autour de la direction de propagation (Z) du faisceau laser (5) produisant comme modification (91) une pluralité de zones de modification dans le matériau de la pièce à usiner (75) s'étendant dans la direction de propagation (Z) du faisceau laser (5) et sur une surface de l'enveloppe cylindrique autour de la direction de propagation (Z) du faisceau laser (5), et
où la pluralité de zones de modification forment en option un anneau circulaire ou un anneau elliptique dans la section transversale perpendiculaire à la direction de propagation (Z).

5. Procédé selon l'une des revendications précédentes, où la modification (91) est un changement structurel du matériau de la pièce à usiner (75) faisant passer le matériau d'un état non gravable du matériau non modifié à un état gravable du matériau modifié, et, où la modification (91) est **caractérisée** en particulier par une augmentation de l'aptitude à la gravure chimique humide en comparaison avec le matériau non modifié.

6. Procédé selon l'une des revendications précédentes, où, pour générer la modification (91) en forme d'enveloppe cylindrique, on irradie une impulsion laser ou une pluralité d'impulsions laser ayant des répartitions transversales de l'intensité (51A, 51B, 151) et des répartitions d'intensité longitudinales (53A, 53B) identiques, qui frappent la pièce à usiner (75) en particulier sous la forme d'une rafale d'impulsions laser à des intervalles de temps de l'ordre de quelques nanosecondes ou sous la forme d'une séquence d'impulsions laser espacées dans le temps ou de rafales d'impulsions laser à des intervalles de temps de l'ordre de quelques centaines de microsecondes au maximum, et où la pluralité d'impulsions laser frappent en particulier au même endroit afin de garantir un chevauchement des zones d'interaction.

7. Procédé selon l'une des revendications précédentes, comprenant en outre l'application (étape 69) sur le faisceau laser (5) d'une répartition de phase transversale (25) qui, après focalisation du faisceau laser (5), conduit à la répartition transversale annulaire de l'intensité (51A, 51B, 151), où la répartition transversale annulaire de l'intensité (51A, 51B, 151) présente un diamètre circulaire (d), en particulier de forme annulaire, restant essentiellement inchangé le long d'une direction de propagation (Z) du faisceau laser (5) dans la pièce à usiner (75), ou de forme annulaire elliptique, présentant un diamètre minimal (dmin) et un diamètre maximal (dmax) restant essentiellement inchangés le long d'une direction de propagation (Z) du faisceau laser (5) dans la pièce à usiner (75).

8. Procédé selon la revendication 7, où la répartition de phase (25) est formée à l'aide d'un élément de formation de faisceau optique diffractif (15) selon l'une des revendications 11 à 14, ou par une combinaison d'un axicon pour appliquer une répartition de phase en axicon (31) et d'une plaque à vis de phase (29) pour appliquer une répartition de phase en vortex, ou par une combinaison d'un axicon pour appliquer une répartition de phase en axicon (131) et d'une plaque de phase de faisceau d'aile (130) pour appliquer une répartition de phase en faisceau d'aile (135).

9. Procédé selon l'une des revendications précédentes, où
la pièce à usiner (75) est un verre mince et en particulier un verre très mince et/ou
l'impulsion laser est une impulsion ultracourte, en particulier avec des longueurs d'impulsion de quelques picosecondes et plus courtes, en particulier de l'ordre de quelques à quelques centaines de femtosecondes, et/ou
la répartition transversale annulaire de l'intensité (51A, 51B, 151) et donc le microtrou présentent un diamètre circulaire (d, d') dans le cas d'une forme de base transversale circulaire, ou un diamètre maximal (dmax) inférieur ou égal à 500 µm dans le cas d'une forme de base transversale elliptique et/ou
la pièce à usiner (75) présente une épaisseur (D) dans la direction de propagation (9) du faisceau laser incident (5) inférieure ou égale à 2 mm, en particulier de l'ordre de 5 µm à 2 mm ou de l'ordre de 10 µm à 200 µm, et/ou
le matériau de la pièce à usiner (75) est en grande partie transparent pour le faisceau laser (5).

10. Procédé selon l'une des revendications précédentes, comprenant en outre
l'exécution d'un mouvement relatif entre la pièce à usiner (75) et le faisceau laser (5) afin de créer un réseau de microtrous.

11. Installation d'usinage au laser (1) pour l'usinage d'une pièce à usiner (75) à l'aide d'un faisceau laser (5) par modification d'un matériau (3) de la pièce à usiner (75) dans une zone focale (7) du faisceau laser (5) formée de manière allongée dans une direction de propagation (9) du faisceau laser, comprenant :
une source de faisceau laser (11) émettant un faisceau laser (5), une tête d'usinage (17) comportant une lentille de focalisation (17A) ; un bain de gravure chimique humide (80) ; **caractérisé par** un système optique (13) présentant
- un élément de formation de faisceau optique diffractif (15) pour appliquer une répartition de phase sur un profil de faisceau transversal d'un faisceau laser (5) avec des éléments de surface (15A) adjacents les uns aux autres et constituant une structure réticulaire plane, dans laquelle une valeur de décalage de phase est associée à chaque élément de surface (15A) et dans laquelle les valeurs de décalage de phase définissent une répartition de phase bidimensionnelle (25), où la répartition de phase bidimensionnelle (25) présente une position centrale du faisceau (23, 123) définissant une direction radiale dans la structure réticulaire plane, où les valeurs de décalage de phase forment respectivement, par rapport à la position centrale du faisceau (23) dans la direction radiale, des fonctions réticulaires périodiques présentant une même période réticulaire (Tr), et où on associe à chacune des fonctions réticulaires périodiques une phase réticulaire radiale par rapport à la position centrale du faisceau (23, 123), qui est formée par une contribution de phase augmentant de façon continue en azimut ou variant dans des sections angulaires azimutales (128), en particulier augmentant, diminuant ou alternant entre une ou plusieurs valeurs, et
- où l'élément de formation de faisceau optique diffractif (15) est disposé dans la trajectoire du faisceau laser (5) afin d'appliquer une répartition de phase bidimensionnelle au faisceau laser (5), et où la répartition de phase bidimensionnelle est adaptée pour réaliser une formation de la zone focale allongée (7) dans le matériau (3) en focalisant le faisceau laser (5) grâce à la lentille de focalisation (17A), où, pour générer une modification (91), en particulier avec une impulsion laser ou une pluralité d'impulsions laser, la zone focale (7) présente une répartition transversale annulaire de l'intensité (51A, 51B), en particulier en forme d'anneau circulaire ou d'anneau elliptique s'étendant dans une direction de propagation (Z) du faisceau laser (5) au moins sur une longueur (L) conduisant à une formation de la modification (91) depuis un côté d'entrée (61A) du matériau (3) jusqu'à un côté de sortie (61B) du matériau (3), où la modification (91) délimite un corps (77) de forme cylindrique, en particulier de forme cylindrique circulaire ou elliptique-cylindrique annulaire, d'un matériau résiduel (79) entourant la modification (91),
de sorte que le corps (77) puisse être séparé du matériau résiduel (79) dans le bain de gravure chimique humide (80).

12. Installation d'usinage au laser (1) selon la revendication 11, où les fonctions réticulaires périodiques présentent chacune une partie d'une courbe de phase réticulaire en dents de scie, où une pente d'une zone de montée dans chacune des courbes de phase réticulaires en dents de scie correspond à un angle axicon prédéterminé associé à l'élément de formation de faisceau optique diffractif (15).

13. Installation d'usinage au laser (1) selon la revendication 11 ou 12, où les fonctions réticulaires périodiques présentent chacune une partie d'une répartition de phase de collimation bidimensionnelle, en particulier d'une répartition de phase de focalisation bidimensionnelle, réalisée selon une symétrie radiale par rapport à la position centrale du faisceau (23).

14. Installation d'usinage au laser (1) pour l'usinage d'une pièce à usiner (75) à l'aide d'un faisceau laser (5) par modification d'un matériau (3) de la pièce à usiner (75) dans une zone focale (7) du faisceau laser (5) formée de manière allongée dans une direction de propagation (9) du faisceau laser (5), comprenant :
une source de faisceau laser (11) émettant un faisceau laser (5),
une tête d'usinage (17) comportant une lentille de focalisation (17A) ; un bain de gravure chimique humide (80) ; **caractérisé par** un système optique (13) qui
- présente une combinaison d'un axicon pour appliquer une répartition de phase en axicon (27) et d'une plaque à vis de phase (30) pour appliquer une répartition de phase en vortex, ou par une combinaison d'un axicon pour appliquer une répartition de phase en axicon (27) et d'une plaque de phase de faisceau d'aile (130) pour appliquer une répartition de phase en faisceau d'aile (135),
où l'élément de formation de faisceau optique diffractif (15) est disposé dans la trajectoire du faisceau laser (5) afin d'appliquer une répartition de phase bidimensionnelle au faisceau laser (5), et où la répartition de phase bidimensionnelle est adaptée pour réaliser une formation de la zone focale allongée (7) dans le matériau (3) en focalisant le faisceau laser (5) grâce à la lentille de focalisation (17A), où, pour générer une modification (91), en particulier avec une impulsion laser ou une pluralité d'impulsions laser, la zone focale (7) présente une répartition transversale annulaire de l'intensité (51A, 51B), en particulier en forme d'anneau circulaire ou d'anneau elliptique s'étendant dans une direction de propagation (Z) du faisceau laser (5) au moins sur une longueur (L) conduisant à une formation de la modification (91) depuis un côté d'entrée (61A) du matériau (3) jusqu'à un côté de sortie (61B) du matériau (3), où la modification (91) délimite un corps (77) de forme cylindrique, en particulier de forme cylindrique circulaire ou elliptique-cylindrique annulaire, d'un matériau résiduel (79) entourant la modification (91) de sorte que le corps (77) puisse être séparé du matériau résiduel (79) dans le bain de gravure chimique humide (80).

15. Installation d'usinage au laser (1) selon l'une des revendications 11 à 14, où la répartition de phase bidimensionnelle est adaptée pour que la répartition transversale annulaire de l'intensité (51A, 51B, 151) présente une zone d'intensité (29A) s'étendant de manière continue autour de la direction de propagation (Z) du faisceau laser (5) ou plusieurs zones d'intensité (129A, 229A, 229B) limitées à des plages angulaires azimutales (128) autour de la direction de propagation (Z) du faisceau laser (5), et
où la modification (91) forme en option, en section transversale perpendiculaire à la direction de propagation (Z) du faisceau laser (5), un anneau circulaire continu ou interrompu ou un anneau elliptique continu ou interrompu.
